(19) Europäisches Patentamt
European Patent Office
Office européen des brevets

(11) EP 3 202 856 A1

(12) EUROPEAN PATENT APPLICATION
published in accordance with Art. 153(4) EPC

(43) Date of publication:
09.08.2017 Bulletin 2017/32

(21) Application number: 15845736.6

(22) Date of filing: 30.09.2015

(51) Int Cl.:
*C09B 67/20* (2006.01) *B41J 2/01* (2006.01)
*B41M 5/00* (2006.01) *C09B 11/28* (2006.01)
*C09D 11/328* (2014.01) *C09B 11/24* (2006.01)

(86) International application number:
PCT/JP2015/077888

(87) International publication number:
WO 2016/052685 (07.04.2016 Gazette 2016/14)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: 30.09.2014 JP 2014202470

(71) Applicant: **Fujifilm Corporation**
**Minato-ku**
**Tokyo 106-8620 (JP)**

(72) Inventors:
- **FUJIE Yoshihiko**
  **Ashigarakami-gun**
  **Kanagawa 258-8577 (JP)**
- **SAKAI Yusuke**
  **Ashigarakami-gun**
  **Kanagawa 258-8577 (JP)**
- **TATEISHI Keiichi**
  **Ashigarakami-gun**
  **Kanagawa 258-8577 (JP)**
- **KOBAYASHI Hiromi**
  **Ashigarakami-gun**
  **Kanagawa 258-8577 (JP)**

(74) Representative: **Hoffmann Eitle**
**Patent- und Rechtsanwälte PartmbB**
**Arabellastraße 30**
**81925 München (DE)**

# (54) COLORING COMPOSITION, INKJET RECORDING INK, AND INKJET RECORDING METHOD

(57) Provided are a coloring composition including a xanthene compound which is soluble in water and a compound represented by the following Formula (A); an ink jet recording ink; and an ink jet recording method.

Formula (A)

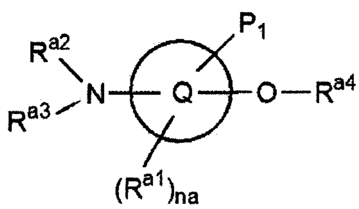

In Formula (A), Q represents a benzene ring or a naphthalene ring. $P_1$ represents $-CO_2M$ or $-SO_3M$. $R^{a1}$ represents a substituent, and $R^{a2}$, $R^{a3}$, and $R^{a4}$ each independently represent a hydrogen atom or a substituent. na represents an integer of 0 to 3. When na is 2 or more, a plurality of $R^{a1}$'s may be the same as or different from each other. M represents a counter cation.

EP 3 202 856 A1

## Description

## BACKGROUND OF THE INVENTION

1. Field of the Invention

The present invention relates to a coloring composition, an ink jet recording ink, and an ink jet recording method.

2. Description of the Related Art

In the ink jet recording method, as is well-known in the related art, small ink droplets are jetted to be attached to a recording medium such as paper to perform printing. In this printing method, a high-resolution and high-quality image can be printed rapidly and simply using an inexpensive device. Particularly in color printing, recently, a technique of the printing method has been developed as an image forming method capable of replacing photography.

In a case where a color image is formed using the ink jet recording method, in general, at least a yellow ink, a magenta ink, a cyan ink, and a black ink are used. In these inks, for example, the following performances are required: that values of physical properties such as viscosity or surface tension are in appropriate ranges; that nozzle clogging is not likely to occur, storage stability are excellent, and a recording image having a high density can be obtained; and that light fastness, ozone fastness, water fastness, and moisture fastness are excellent.

In many cases, these performances are satisfied by using an aqueous ink in which water or a mixed solution of water and a water-soluble organic solvent is used as a main solvent. However, in particular, tone, vividness, light fastness, ozone fastness, water fastness, moisture fastness, and the like largely depend on colorants, and various dyes have been studied in the related art.

For example, JP2011-148973A describes an acylamino group-substituted xanthene compound, and saturation, light fastness, and ozone fastness of an ink jet recorded material formed by using coloring composition including this compound are investigated.

JP2006-199860A describes a xanthene compound to which an aminohydroxybenzoic acid compound is linked, as a xanthene compound having high light fastness.

In addition, JP2011-137968A discloses toner having excellent transfer properties and including a metal salt of acetylsalicylic acid.

## SUMMARY OF THE INVENTION

However, in the dye field, further improvement in the performances is required, and a coloring composition which has excellent hues and is capable of further improving image fastness such as light fastness is required. When a coloring composition including a xanthene compound is prepared, foaming by shaking and stirring is performed, and thus there is a problem in that if printing is performed immediately after the preparation of the composition, stripes are generated. Therefore, a coloring composition having excellent defoaming properties is required.

The present invention has been made in consideration of the above-described circumstances, and an object thereof is to provide a coloring composition which has excellent hues, is capable of forming an image having excellent light fastness, and has excellent defoaming properties. In addition, another object of the present invention is to provide an ink jet recording ink including the above-described coloring composition, and an ink jet recording method using the ink jet recording ink.

The present inventors performed a thorough investigation and found that this problem can be solved by a combination of a xanthene compound which is soluble in water and a specific aminohydroxybenzoic acid compound or an analogous compound thereof.

They also found that an unexpected effect in which workability of suppressing foaming is excellent can be obtained using the coloring composition.

That is, the present invention relates to the features described below.

[1] A coloring composition comprising: a xanthene compound which is soluble in water; and a compound represented by the following Formula (A).

Formula (A)

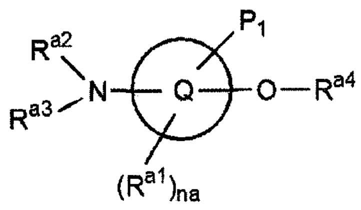

In Formula (A), Q represents a benzene ring or a naphthalene ring. $P_1$ represents $-CO_2M$ or $-SO_3M$. $R^{a1}$ represents a substituent, and $R^{a2}$, $R^{a3}$, and $R^{a4}$ each independently represent a hydrogen atom or a substituent. na represents an integer of 0 to 3. When na is 2 or more, a plurality of $R^{a1}$'s may be the same as or different from each other. M represents a counter cation.

[2] The coloring composition according to [1], in which the compound represented by Formula (A) is a compound represented by the following Formula (A-1-1).

Formula (A-1-1)

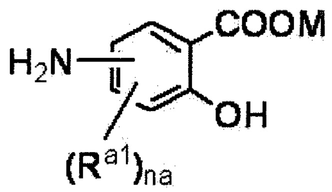

In Formula (A-1-1), $R^{a1}$ represents a substituent. na represents an integer of 0 to 3. When na is 2 or more, a plurality of $R^{a1}$'s may be the same as or different from each other. M represents a counter cation.

[3] The coloring composition according to [1] or [2], in which M is a lithium ion, a sodium ion, a potassium ion, or an ammonium ion.

[4] The coloring composition according to any one of [1] to [3], in which the xanthene compound which is soluble in water is at least one of a compound represented by the following Formula (1), a compound represented by the following Formula (2), a compound having a repeating unit represented by the following Formula (3), or a compound represented by the following Formula (4).

Formula (1)

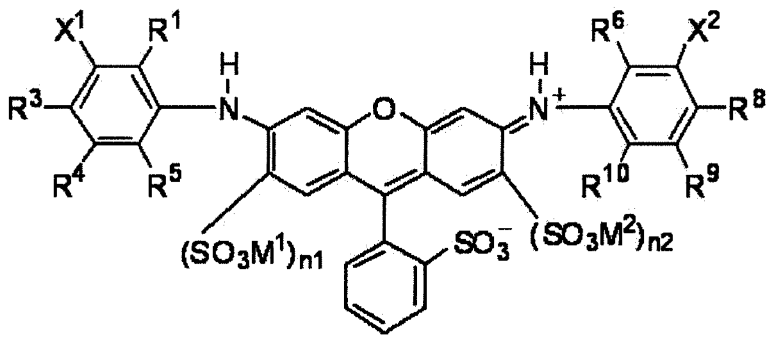

Formula (2)

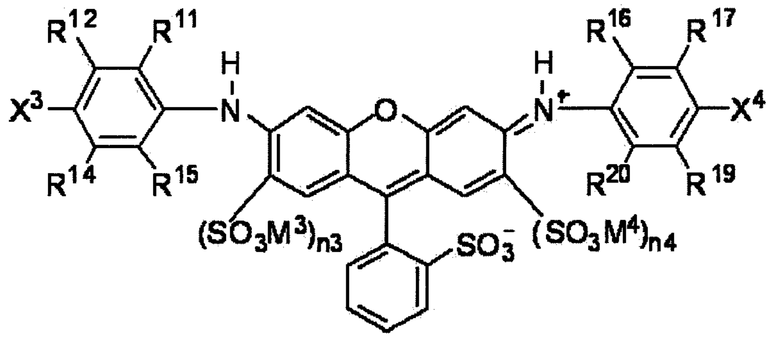

In Formula (1) and Formula (2), $R^1$, $R^3$, $R^4$, $R^5$, $R^6$, $R^8$, $R^9$, $R^{10}$, $R^{11}$, $R^{12}$, $R^{14}$, $R^{15}$, $R^{16}$, $R^{17}$, $R^{19}$, and $R^{20}$ each independently represent a hydrogen atom or a substituent, $X^1$, $X^2$, $X^3$, and $X^4$ each independently represent a hydroxyl group, a substituted or unsubstituted alkoxy group, a substituted or unsubstituted aryloxy group, a substituted or unsubstituted heterocyclic oxy group, a substituted or unsubstituted alkylamino group, a substituted or unsubstituted arylamino group, a substituted or unsubstituted heterylamino group, a substituted or unsubstituted carbonylamino group, a substituted or unsubstituted acyloxy group, a substituted or unsubstituted aminocarbonyloxy group, a substituted or unsubstituted sulfonylamino group, a substituted or unsubstituted alkoxycarbonylamino group, a substituted or unsubstituted aryloxycarbonylamino group, a substituted or unsubstituted ureido group, a substituted or unsubstituted alkylthio group, or a substituted or unsubstituted arylthio group, $M^1$, $M^2$, $M^3$, and $M^4$ each independently represent a hydrogen atom or an alkali metal, and n1, n2, n3, and n4 each independently represent 0 or 1.

Formula (3)

$$*\!-\!\left[L^1\!-\!D^1\right]_{n^1}\!-\!*$$

In Formula (3), $L^1$ represents a divalent linking group, and $D^1$ represents a partial structure obtained by removing two hydrogen atoms from the compound represented by Formula (1) or Formula (2). $n^1$ represents 2 to 100.

Formula (4) $L^2[D^2]_{n2}$

In Formula (4), $L^2$ represents an $n^2$-valent linking group, and $D^2$ represents a partial structure obtained by removing one hydrogen atom from the compound represented by Formula (1) or Formula (2). $n^2$ represents an integer of 2 to 6.

[5] The coloring composition according to [4], in which the compound represented by Formula (1) or Formula (2) is a compound represented by the following Formula (1-1) or Formula (2-1).

Formula (1-1)

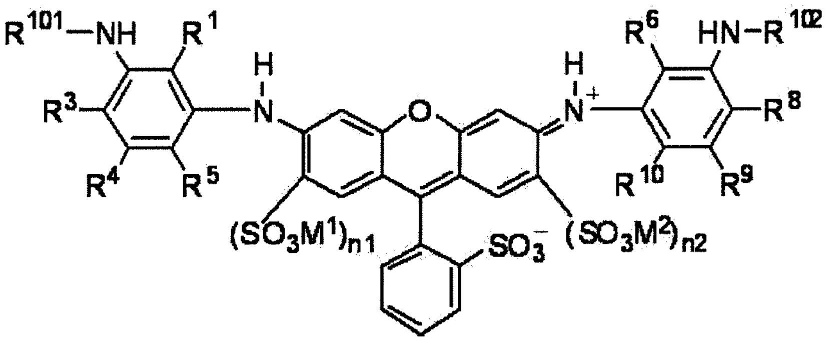

Formula (2-1)

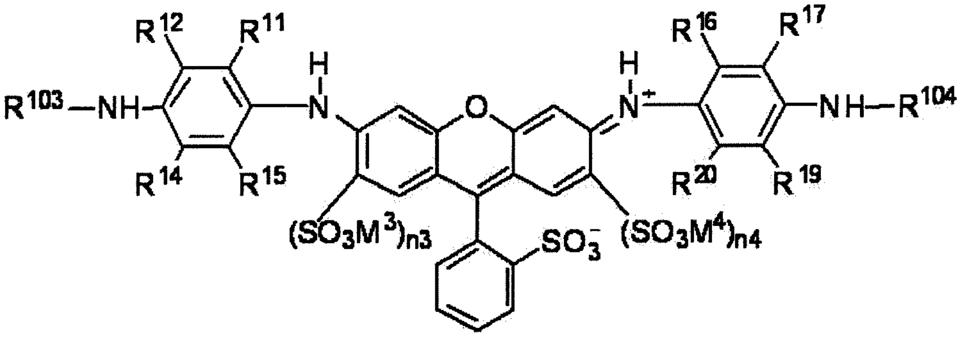

In Formula (1-1) and Formula (2-1), $R^1$, $R^3$, $R^4$, $R^5$, $R^6$, $R^8$, $R^9$, $R^{10}$, $R^{11}$, $R^{12}$, $R^{14}$, $R^{15}$, $R^{16}$, $R^{17}$, $R^{19}$, and $R^{20}$ each independently represent a hydrogen atom or a substituent, $R^{101}$, $R^{102}$, $R^{103}$, and $R^{104}$ each independently represent a substituted or unsubstituted alkyl group, a substituted or unsubstituted aryl group, a substituted or unsubstituted heterocyclic group, a substituted or unsubstituted carbonyl group, a substituted or unsubstituted sulfonyl group, a substituted or unsubstituted alkoxycarbonyl group, a substituted or unsubstituted aryloxycarbonyl group, a carbamoyl group, a substituted or unsubstituted monoalkylaminocarbonyl group, a substituted or unsubstituted dialkylaminocarbonyl group, a substituted or unsubstituted monoarylaminocarbonyl group, a substituted or unsubstituted diarylaminocarbonyl group, or a substituted or unsubstituted alkylarylaminocarbonyl group, $M^1$, $M^2$, $M^3$, and $M^4$ each independently represent a hydrogen atom or an alkali metal, and n1, n2, n3, and n4 each independently represent 0 or 1.

[6] The coloring composition according to [5], in which $R^{101}$, $R^{102}$, $R^{103}$, and $R^{104}$ each independently represent a substituted or unsubstituted alkyl group, a substituted or unsubstituted aryl group, a substituted or unsubstituted heterocyclic group, a substituted or unsubstituted sulfonyl group, a substituted or unsubstituted alkoxycarbonyl group, a substituted or unsubstituted aryloxycarbonyl group, a carbamoyl group, a substituted or unsubstituted monoalkylaminocarbonyl group, a substituted or unsubstituted dialkylaminocarbonyl group, a substituted or unsubstituted monoarylaminocarbonyl group, a substituted or unsubstituted diarylaminocarbonyl group, or a substituted or unsubstituted alkylarylaminocarbonyl group.

[7] The coloring composition according to any one of [4] to [6], in which $R^4$ and $R^9$ in Formula (1) or Formula (1-1) each independently represent a sulfo group.

[8] The coloring composition according to any one of [1] to [7], in which a content of a xanthene compound which is soluble in water is 1 to 20 mass%.

[9] The coloring composition according to any one of [1] to [8], in which a content of a compound represented by Formula (A) is 0.0001 to 5 mass%.

[10] An ink jet recording ink comprising the coloring composition according to any one of [1] to [9].

[11] An ink jet recording method comprising forming an image using the coloring composition according to any one of [1] to [9] or using the ink jet recording ink according to [10].

According to the present invention, a coloring composition which has excellent hues, is capable of forming an

image having excellent light fastness, and has excellent defoaming properties can be provided. In addition, an ink jet recording ink including the above-described coloring composition, and an ink jet recording method using the ink jet recording ink can be provided.

## DESCRIPTION OF THE PREFERRED EMBODIMENTS

Hereinafter, the present invention will be described in detail.

First, specific examples of a substituent in the present invention are defined as a substituent group A.

(Substituent Group A)

Examples of the substituent group A includes a halogen atom, an alkyl group, an aralkyl group, an alkenyl group, an alkynyl group, an aryl group, a heterocyclic group, a cyano group, a hydroxyl group, a nitro group, an alkoxy group, an aryloxy group, a silyloxy group, a heterocyclic oxy group, an acyloxy group, a carbamoyloxy group, an alkoxycarbonyloxy group, an aryloxycarbonyloxy group, an amino group, an acylamino group, an aminocarbonylamino group, an alkoxycarbonylamino group, an aryloxycarbonylamino group, a sulfamoylamino group, an alkyl- or aryl-sulfonylamino group, a mercapto group, an alkylthio group, an arylthio group, a heterocyclic thio group, a sulfamoyl group, an alkyl- or aryl-sulfinyl group, an alkyl- or aryl-sulfonyl group, an acyl group, an aryloxycarbonyl group, an alkoxycarbonyl group, a carbamoyl group, an aryl or heterocyclic azo group, an imido group, a phosphino group, a phosphinyl group, a phosphinyloxy group, a phosphinylamino group, a silyl group, and an ionic hydrophilic group. These substituents may further have a substituent, and examples of this substituent include a group selected from the above-described substituent group A.

Examples of the halogen atom include a fluorine atom, a chlorine atom, a bromine atom, and an iodine atom.

Examples of the alkyl group include a linear, branched, or cyclic substituted or unsubstituted alkyl group. In addition, a cycloalkyl group, a bicycloalkyl group, a tricycloalkyl group and the like having many ring structures are also included. Alkyl groups (for example, alkyl groups of an alkoxy group or an alkylthio group) in substituents described below are also included in the examples of the above-described alkyl group.

As the alkyl group, an alkyl group having 1 to 30 carbon atoms is preferable, and examples thereof include a methyl group, an ethyl group, a n-propyl group, an i-propyl group, a t-butyl group, a n-octyl group, an eicosyl group, a 2-chloroethyl group, a 2-cyanoethyl group, and a 2-ethylhexyl group. As the cycloalkyl group, a substituted or unsubstituted cycloalkyl group having 3 to 30 carbon atoms is preferable, and examples thereof include a cyclohexyl group, a cyclopentyl group, and a 4-n-dodecylcyclohexyl group. As the bicycloalkyl group, a substituted or unsubstituted bicycloalkyl group having 5 to 30 carbon atoms is preferable, that is, a monovalent group obtained by removing one hydrogen atom from bicycloalkane having 5 to 30 carbon atoms is preferable, and examples thereof include a bicyclo[1,2,2]heptan-2-yl group and a bicyclo[2,2,2]octan-3-yl group.

Examples of the aralkyl group include a substituted or unsubstituted aralkyl group. As the substituted or unsubstituted aralkyl group, an aralkyl group having 7 to 30 carbon atoms is preferable, and examples thereof include a benzyl group and a 2-phenethyl group.

Examples of the alkenyl group include a linear, branched, or cyclic substituted or unsubstituted alkenyl group. In addition, a cycloalkenyl group and a bicycloalkenyl group are also included.

As the alkenyl group, a substituted or unsubstituted alkenyl group having 2 to 30 carbon atoms is preferable, and examples thereof include a vinyl group, an allyl group, a prenyl group, a geranyl group, and an oleyl group. As the cycloalkenyl group, a substituted or unsubstituted cycloalkenyl group having 3 to 30 carbon atoms is preferable, that is, a monovalent group obtained by removing one hydrogen atom from cycloalkene having 3 to 30 carbon atoms is preferable, and examples thereof include a 2-cyclopenten-1-yl group and a 2-cyclohexen-1-yl group. As the bicycloalkenyl group, a substituted or unsubstituted bicycloalkenyl group can be used. A substituted or unsubstituted bicycloalkenyl group having 5 to 30 carbon atoms is preferable, that is, a monovalent group obtained by removing one hydrogen atom from bicycloalkene having one double bond is preferable, and examples thereof include a bicyclo[2,2,1]hept-2-en-1-yl group and a bicyclo[2,2,2]oct-2-en-4-yl group.

As the alkynyl group, a substituted or unsubstituted alkynyl group having 2 to 30 carbon atoms is preferable, and examples thereof include an ethynyl group, a propargyl group, and a trimethylsilylethynyl group.

As the aryl group, a substituted or unsubstituted aryl group having 6 to 30 carbon atoms is preferable, and examples thereof include a phenyl group, a p-tolyl group, a naphthyl group, a m-chlorophenyl group, an o-hexadecanoylaminophenyl group.

As the heterocyclic group, a monovalent group obtained by removing one hydrogen atom from a 5- or 6-membered substituted or unsubstituted aromatic or nonaromatic heterocyclic compound is preferable, and a 5- or 6-membered aromatic heterocyclic group having 3 to 30 carbon atoms is more preferable, and examples thereof include a 2-furyl group, a 2-thienyl group, a 2-pyrimidinyl group, and a 2-benzothiazolyl group. Examples of the nonaromatic

heterocyclic group include a morpholinyl group.

As the alkoxy group, a substituted or unsubstituted alkoxy group having 1 to 30 carbon atoms is preferable, and examples thereof include a methoxy group, an ethoxy group, an isopropoxy group, a t-butoxy group, a n-octyloxy group, and a 2-methoxyethoxy group.

As the aryloxy group, a substituted or unsubstituted aryloxy group having 6 to 30 carbon atoms is preferable, and examples thereof include a phenoxy group, a 2-methylphenoxy group, a 4-t-butylphenoxy group, a 3-nitrophenoxy group, and a 2-tetradecanoylaminophenoxy group.

As the silyloxy group, a substituted or unsubstituted silyloxy group having 0 to 20 carbon atoms is preferable, and examples thereof include a trimethylsilyloxy group and a diphenylmethylsilyloxy group.

As the heterocyclic oxy group, a substituted or unsubstituted heterocyclic oxy group having 2 to 30 carbon atoms is preferable, and examples thereof include a 1-phenyltetrazole-5-oxy group and a 2-tetrahydropyranyloxy group.

As the acyloxy group, a formyloxy group, a substituted or unsubstituted alkylcarbonyloxy group having 2 to 30 carbon atoms, or a substituted or unsubstituted arylcarbonyloxy group having 6 to 30 carbon atoms is preferable, and examples thereof include an acetyloxy group, a pivaloyloxy group, a stearoyloxy group, a benzoyloxy group, and a p-methoxyphenylcarbonyloxy group.

As the carbamoyloxy group, a substituted or unsubstituted carbamoyloxy group having 1 to 30 carbon atoms is preferable, and examples thereof include a N,N-dimethylcarbamoyloxy group, a N,N-diethylcarbamoyloxy group, a morpholinocarbonyloxy group, a N,N-di-n-octylaminocarbonyloxy group, and a N-n-octylcarbamoyloxy group.

As the alkoxycarbonyloxy group, a substituted or unsubstituted alkoxycarbonyloxy group having 2 to 30 carbon atoms is preferable, and examples thereof include a methoxycarbonyloxy group, an ethoxycarbonyloxy group, a t-butoxycarbonyloxy group, and an n-octylcarbonyloxy group.

As the aryloxycarbonyloxy group, a substituted or unsubstituted aryloxycarbonyloxy group having 7 to 30 carbon atoms is preferable, and examples thereof include a phenoxycarbonyloxy group, a p-methoxyphenoxycarbonyloxy group, and a p-n-hexadecyloxyphenoxycarbonyloxy group.

Examples of the amino group include an alkylamino group, an arylamino group, and a heterocyclic amino group. As the amino group, an amino group, a substituted or unsubstituted alkylamino group having 1 to 30 carbon atoms, a substituted or unsubstituted anilino group having 6 to 30 carbon atoms is preferable, and examples thereof include a methylamino group, a dimethylamino group, an anilino group, a N-methyl-anilino group, a diphenylamino group, and a triazinylamino group.

As the acylamino group, a formylamino group, a substituted or unsubstituted alkylcarbonylamino group having 1 to 30 carbon atoms, or a substituted or unsubstituted arylcarbonylamino group having 6 to 30 carbon atoms is preferable, and examples thereof include an acetylamino group, a pivaloylamino group, a lauroylamino group, a benzoylamino group, and a 3,4,5-tri-n-octyloxyphenylcarbonylamino group.

As the aminocarbonylamino group, a substituted or unsubstituted aminocarbonylamino group having 1 to 30 carbon atoms is preferable, and examples thereof include a carbamoylamino group, a N,N-dimethylaminocarbonylamino group, a N,N-diethylaminocarbonylamino group, and a morpholinocarbonylamino group.

As the alkoxycarbonylamino group, a substituted or unsubstituted alkoxycarbonylamino group having 2 to 30 carbon atoms is preferable, and examples thereof include a methoxycarbonylamino group, an ethoxycarbonylamino group, a t-butoxycarbonylamino group, a n-octadecyloxycarbonylamino group, and a N-methyl-methoxycarbonylamino group.

As the aryloxycarbonylamino group, a substituted or unsubstituted aryloxycarbonylamino group having 7 to 30 carbon atoms is preferable, and examples thereof include a phenoxycarbonylamino group, a p-chlorophenoxycarbonylamino group, and a m-n-octyloxyphenoxycarbonylamino group.

As the sulfamoylamino group, a substituted or unsubstituted sulfamoylamino group having 0 to 30 carbon atoms is preferable, and examples thereof include a sulfamoylamino group, a N,N-dimethylaminosulfonylamino group, and a N-n-octylaminosulfonylamino group.

As the alkyl- or aryl-sulfonylamino group, a substituted or unsubstituted alkylsulfonylamino group having 1 to 30 carbon atoms or a substituted or unsubstituted arylsulfonylamino group having 6 to 30 carbon atoms is preferable, and examples thereof include a methylsulfonylamino group, a butylsulfonylamino group, a phenylsulfonylamino group, a 2,3,5-trichlorophenylsulfonylamino group, and a p-methylphenylsulfonylamino group.

As the alkylthio group, a substituted or unsubstituted alkylthio group having 1 to 30 carbon atoms is preferable, and examples thereof include a methylthio group, an ethylthio group, and a n-hexadecylthio group.

As the arylthio group, a substituted or unsubstituted arylthio group having 6 to 30 carbon atoms is preferable, and examples thereof include a phenylthio group, a p-chlorophenylthio group, and a m-methoxyphenylthio group.

As the heterocyclic thio group, a substituted or unsubstituted heterocyclic thio group having 2 to 30 carbon atoms is preferable, and examples thereof include a 2-benzothiazolylthio group and a 1-phenyltetrazole-5-ylthio group.

As the sulfamoyl group, a substituted or unsubstituted sulfamoyl group having 0 to 30 carbon atoms is preferable, and examples thereof include a N-ethylsulfamoyl group, a N-(3-dodecyloxypropyl)sulfamoyl group, a N,N-dimethylsulfamoyl group, a N-acetylsulfamoyl group, a N-benzoylsulfamoyl group, and a N-(N'-phenylcarbamoyl)sulfamoyl group.

As the alkyl- or aryl-sulfinyl group, a substituted or unsubstituted alkylsulfinyl group having 1 to 30 carbon atoms or a substituted or unsubstituted arylsulfinyl group having 6 to 30 carbon atoms is preferable, and examples thereof include a methylsulfinyl group, an ethylsulfinyl group, a phenylsulfinyl group, and a p-methylphenylsulfinyl group.

As the alkyl- or aryl-sulfonyl group, a substituted or unsubstituted alkylsulfonyl group having 1 to 30 carbon atoms or a substituted or unsubstituted arylsulfonyl group having 6 to 30 carbon atoms is preferable, and examples thereof include a methylsulfonyl group, an ethylsulfonyl group, a phenylsulfonyl group, and a p-methylphenylsulfonyl group.

As the acyl group, a formyl group, a substituted or unsubstituted alkylcarbonyl group having 2 to 30 carbon atoms, a substituted or unsubstituted arylcarbonyl group having 7 to 30 carbon atoms, or a substituted or unsubstituted heterocyclic carbonyl group having 2 to 30 carbon atoms and being bonded to a carbonyl group through a carbon atom is preferable, and examples thereof include an acetyl group, a pivaloyl group, a 2-chloroacetyl group, a stearoyl group, a benzoyl group, a p-n-octyloxyphenylcarbonyl group, a 2-pyridylcarbonyl group, and a 2-furylcarbonyl group.

As the aryloxycarbonyl group, a substituted or unsubstituted aryloxycarbonyl group having 7 to 30 carbon atoms is preferable, and examples thereof include a phenoxycarbonyl group, an o-chlorophenoxycarbonyl group, a m-nitrophenoxycarbonyl group, and a p-t-butylphenoxycarbonyl group.

As the alkoxycarbonyl group, a substituted or unsubstituted alkoxycarbonyl group having 2 to 30 carbon atoms is preferable, and examples thereof include a methoxycarbonyl group, an ethoxycarbonyl group, a t-butoxycarbonyl group, and a n-octadecyloxycarbonyl group.

As the carbamoyl group, a substituted or unsubstituted carbamoyl group having 1 to 30 carbon atoms is preferable, and examples thereof include a carbamoyl group, a N-methylcarbamoyl group, a N,N-dimethylcarbamoyl group, a N,N-di-n-octylcarbamoyl group, and a N-(methylsulfonyl)carbamoyl group.

As the aryl- or heterocyclic azo group, a substituted or unsubstituted aryl azo group having 6 to 30 carbon atoms or a substituted or unsubstituted heterocyclic azo group having 3 to 30 carbon atoms is preferable, and examples thereof include a phenylazo group, a p-chlorophenylazo group, and a 5-ethylthio-1,3,4-thiadiazol-2-ylazo group.

As the imido group, for example, a N-succinimido group or a N-phthalimido group is preferable.

As the phosphino group, a substituted or unsubstituted phosphino group having 0 to 30 carbon atoms is preferable, and examples thereof include a dimethylphosphino group, a diphenylphosphino group, and a methylphenoxyphosphino group.

As the phosphinyl group, a substituted or unsubstituted phosphinyl group having 0 to 30 carbon atoms is preferable, and examples thereof include a phosphinyl group, a dioctyloxyphosphinyl group, and a diethoxyphosphinyl group.

As the phosphinyloxy group, a substituted or unsubstituted phosphinyloxy group having 0 to 30 carbon atoms is preferable, and examples thereof include a diphenoxyphosphinyloxy group and a dioctyloxyphosphinyloxy group.

As the phosphinylamino group, a substituted or unsubstituted phosphinylamino group having 0 to 30 carbon atoms is preferable, and examples thereof include a dimethoxyphosphinylamino group and a dimethylaminophosphinylamino group.

As the silyl group, a substituted or unsubstituted silyl group having 0 to 30 carbon atoms is preferable, and examples thereof include a trimethylsilyl group, a t-butyldimethylsilyl group, and a phenyldimethylsilyl group.

Examples of the ionic hydrophilic group include a sulfo group, a carboxyl group, a thiocarboxyl group, a sulfino group, a phosphono group, a dihydroxyphosphino group, and a quaternary ammonium group. A sulfo group or a carboxyl group is particularly preferable. In addition, the ionic hydrophilic group may be a cation or an anion, and a state including a cation or an anion is called a salt. In addition, the carboxyl group, the phosphono group, or the sulfo group may be in the form of a salt, and examples of a counter cation which forms a salt with the carboxyl group, the phosphono group, or the sulfo group include an ammonium ion, an alkali metal ion (for example, a lithium ion, a sodium ion, or a potassium ion), and an organic cation (for example, a tetramethylammonium ion, a tetramethylguanidium ion, or tetramethylphosphonium). Among these, a lithium salt, a sodium salt, a potassium salt, or an ammonium salt is preferable, a sodium salt or a mixed salt containing a sodium salt as a major component is more preferable, and a sodium salt is most preferable.

In the present invention, in a case where a compound is a salt, the salt is dissociated and present in an water-soluble ink in the form of ions.

The present invention relates to a coloring composition including a xanthene compound which is soluble in water, and a compound represented by the following Formula (A).

[Compound Represented by Formula (A)]

Formula (A)

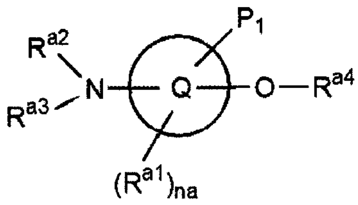

In Formula (A), Q represents a benzene ring or a naphthalene ring. $P_1$ represents $-CO_2$ or $-SO_3M$. $R^{a1}$ represents a substituent, and $R^{a2}$, $R^{a3}$, and $R^{a4}$ each independently represent a hydrogen atom or a substituent. na represents an integer of 0 to 3. When na is 2 or more, a plurality of $R^{a1}$'S may be the same as or different from each other. M represents a counter cation.

In a case where the compound represented by Formula (A) is added to the coloring composition, light fastness after printing is improved. Although the action mechanism thereof is not clear, it is considered that due to an amino group and a substituted or unsubstituted hydroxy group therein, the composition functions as an antioxidant such as aminophenol.

Moreover, in a case where the compound represented by Formula (A) is added to the coloring composition, when the composition is used as an ink, an effect in which foaming at the time of ink preparation is less likely to occur compared to a case where the compound is not added to the composition is obtained. Although the action mechanism thereof is not clear, it is thought that the compound represented by Formula (A) acts as a buffer agent, and thus pH in the ink is controlled and bubbles are removed.

In Formula (A), $R^{a1}$ represents a substituent. Examples of the substituent represented by $R^{a1}$ include substituents selected from the substituent group A, and a halogen atom, a nitro group, an alkyl group, an alkoxy group, a carboxyl group, or a sulfo group is preferable, and a carboxyl group or a sulfo group is more preferable.

na represents an integer of 0 to 3. From the viewpoints of raw material availability, na is preferably 0 or 1 and more preferably 0.

In Formula (A), $R^{a2}$, $R^{a3}$, and $R^{a4}$ each independently represent a hydrogen atom or a substituent. Examples of the substituents represented by $R^{a2}$, $R^{a3}$, and $R^{a4}$ include substituents selected from the substituent group A, and an alkyl group or an acyl group is preferable, and an alkyl group is more preferable.

From the viewpoints of solubility in water and light fastness, $R^{a2}$, $R^{a3}$, and $R^{34}$ are still more preferably a hydrogen atom.

M represents a counter cation. Examples of the counter cation include an ammonium ion, an alkali metal ion (for example, a lithium ion, a sodium ion, or a potassium ion), and an organic cation (for example, a tetramethylammonium ion, a tetramethylguanidium ion, or tetramethylphosphonium), and a lithium ion, a sodium ion, a potassium ion, or an ammonium ion is preferable, a sodium ion or a mixed salt containing a sodium ion as a major component is more preferable, and a sodium ion is most preferable.

The compound represented by Formula (A) is preferably a compound represented by the following Formula (A-1) or (A-2).

Formula (A-1)

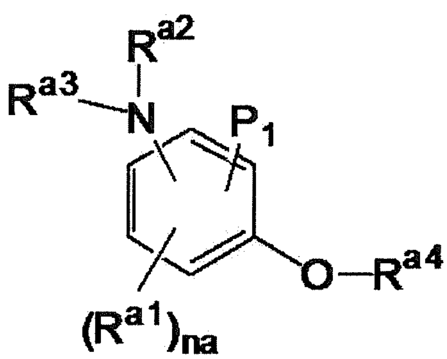

Formula (A-2)

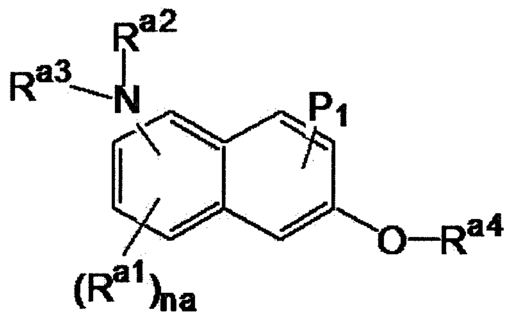

$R^{a1}$, $R^{a2}$, $R^{a3}$, $R^{a4}$, na, and $P_1$ in Formula (A-1) or (A-2) and M in $P_1$ have the same definition, the same specific example, and the same preferable ranges as $R^{a1}$, $R^{a2}$, $R^{a3}$, $R^{a4}$, na, $P_1$, and M in Formula (A).

From the viewpoints of light fastness, the compound represented by Formula (A) is preferably a compound represented by the following Formula (A-1-1).

Formula (A-1-1)

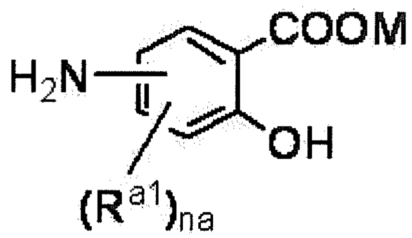

In Formula (A-1-1), $R^{a1}$ represents a substituent. na represents an integer of 0 to 3. When na is 2 or more, a plurality of $R^{a1}$'s may be the same as or different from each other. M represents a counter cation.

$R^{a1}$, na, and M in Formula (A-1-1) have the same specific example and the same preferable ranges as $R^{a1}$, na, and M in Formula (A).

Hereinafter, specific examples of the compound represented by Formula (A) will be shown, but the compounds are not limited to the specific examples.

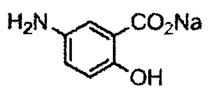 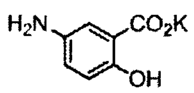 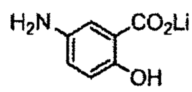 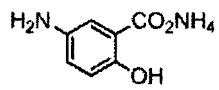

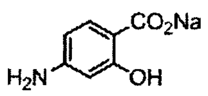 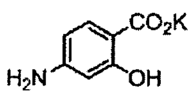 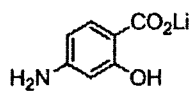 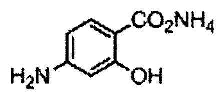

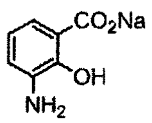 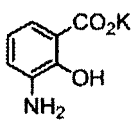 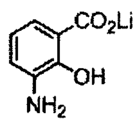 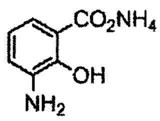

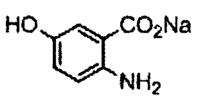 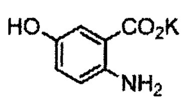 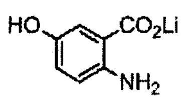 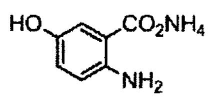

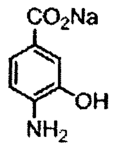
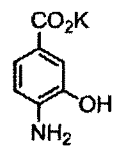
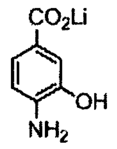
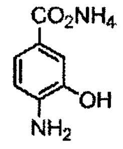

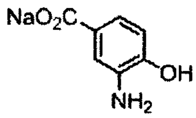
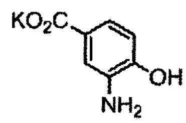
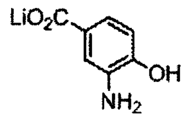
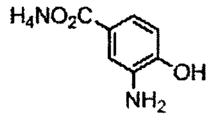

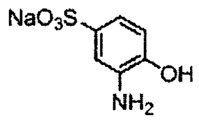
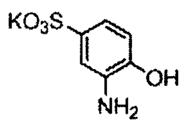
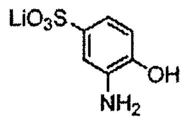
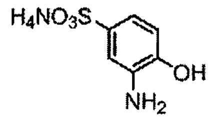

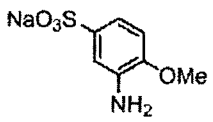
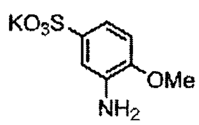
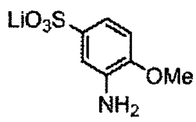
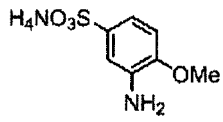

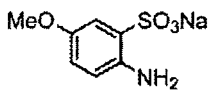
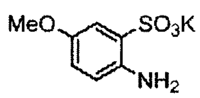
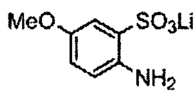
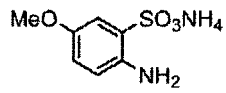

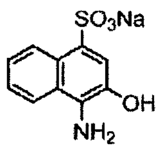
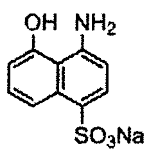
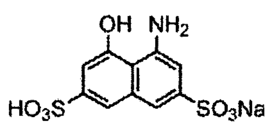
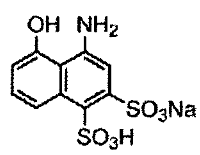

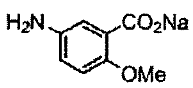
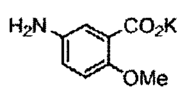
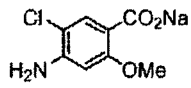
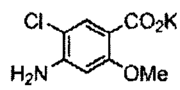

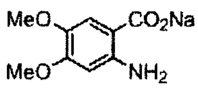
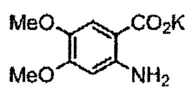

Among the compounds represented by Formula (A), an alkali metal salt of aminosalicylic acid or an ammonium salt is preferable, and an alkali metal salt of 5-aminosalicylic acid or an ammonium salt is most preferable.

[Xanthene Compound which is Soluble in Water]

The coloring composition of the present invention includes a xanthene compound which is soluble in water. Here, "soluble in water" represents that 0.5 mass% or higher of a substance is dissolved in water at 25°C.

From the viewpoint of light fastness, the xanthene compound which is soluble in water of the present invention is preferably any one of a compound represented by the following Formula (1), a compound represented by the following Formula (2), a compound having a repeating unit represented by the following Formula (3), or a compound represented by the following Formula (4).

(Compound Represented by Formula (1) or (2))

Formula (1)

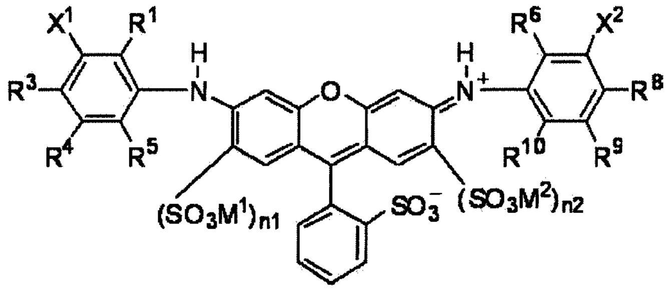

Formula (2)

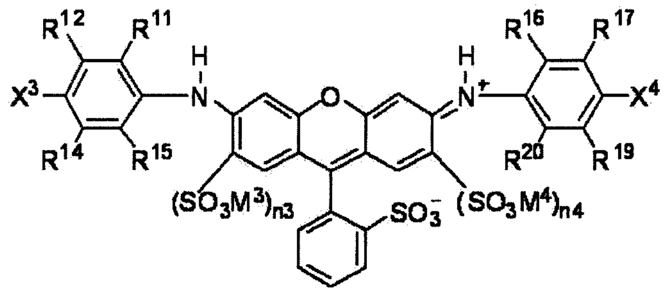

In Formula (1) and Formula (2), $R^1$, $R^3$, $R^4$, $R^5$, $R^6$, $R^8$, $R^9$, $R^{10}$, $R^{11}$, $R^{12}$, $R^{14}$, $R^{15}$, $R^{16}$, $R^{17}$, $R^{19}$, and $R^{20}$ each independently represent a hydrogen atom or a substituent, $X^1$, $X^2$, $X^3$, and $X^4$ each independently represent a hydroxyl group, a substituted or unsubstituted alkoxy group, a substituted or unsubstituted aryloxy group, a substituted or unsubstituted heterocyclic oxy group, a substituted or unsubstituted alkylamino group, a substituted or unsubstituted arylamino group, a substituted or unsubstituted heterylamino group, a substituted or unsubstituted carbonylamino group, a substituted or unsubstituted acyloxy group, a substituted or unsubstituted aminocarbonyloxy group, a substituted or unsubstituted sulfonylamino group, a substituted or unsubstituted alkoxycarbonylamino group, a substituted or unsubstituted aryloxycarbonylamino group, a substituted or unsubstituted ureido group, a substituted or unsubstituted alkylthio group, or a substituted or unsubstituted arylthio group, $m^1$, $M^2$, $M^3$, and $M^4$ each independently represent a hydrogen atom or an alkali metal, and n1, n2, n3, and n4 each independently represent 0 or 1.

In Formula (1) and Formula (2), $R^1$, $R^3$, $R^4$, $R^5$, $R^6$, $R^8$, $R^9$, $R^{10}$, $R^{11}$, $R^{12}$, $R^{14}$, $R^{15}$, $R^{16}$, $R^{17}$, $R^{19}$, and $R^{20}$ each independently represent a hydrogen atom or a substituent. In a case where $R^1$, $R^3$, $R^4$, $R^5$, $R^6$, $R^8$, $R^9$, $R^{10}$, $R^{11}$, $R^{12}$, $R^{14}$, $R^{15}$, $R^{16}$, $R^{17}$, $R^{19}$, and $R^{20}$ represent a substituent, the substituent is selected from, for example, the substituent group A.

In Formula (1) and Formula (2), from the viewpoint of raw material availability and synthesis easiness, $R^1$, $R^5$, $R^6$, $R^{10}$, $R^{11}$, $R^{12}$, $R^{14}$, $R^{15}$, $R^{16}$, $R^{17}$, $R^{19}$, and $R^{20}$ each independently represent preferably a hydrogen atom, a substituted or unsubstituted alkyl group, a substituted or unsubstituted aryl group, a substituted or unsubstituted alkoxy group, a substituted or unsubstituted aryloxy group, a carboxyl group, or a halogen atom, more preferably a substituted or unsubstituted alkyl group, a substituted or unsubstituted aryl group, a substituted or unsubstituted alkoxy group, and particularly preferably a substituted or unsubstituted alkyl group. As the alkyl group, an alkyl group having 1 to 6 carbon atoms is preferable, an alkyl group having 1 to 3 carbon atoms is more preferable, and a methyl group is still more preferable. In addition, in a case each group has a substituent, the substituent is selected from, for example, the substituent group A.

In Formula (1), from the viewpoint of raw material availability, synthesis easiness, light fastness, printing density, and saturation, $R^4$ and $R^9$ each independently represent preferably a hydrogen atom, a substituted or unsubstituted alkyl group, a substituted or unsubstituted aryl group, a substituted or unsubstituted alkoxy group, a substituted or unsubstituted aryloxy group, a substituted or unsubstituted amino group, a substituted or unsubstituted acylamino group, a substituted or unsubstituted alkoxycarbonylamino group, a substituted or unsubstituted alkylsulfonylamino group, a substituted or unsubstituted arylsulfonylamino group, a substituted or unsubstituted alkylureido group, a substituted or unsubstituted arylureido group, a sulfo group, a carboxyl group, or a halogen atom, more preferably a substituted or unsubstituted acylamino group, a substituted or unsubstituted alkoxycarbonylamino group, a substituted or unsubstituted alkylsulfonylamino group, a substituted or unsubstituted arylsulfonylamino group, a substituted or unsubstituted alkylureido group, a substituted or unsubstituted arylureido group, or a sulfo group, and particularly preferably a sulfo group.

In addition, in a case each group has a substituent, the substituent is selected from, for example, the substituent group A.

In Formula (1), from the viewpoint of raw material availability and synthesis easiness, $R^3$ and $R^8$ each independently represent preferably a hydrogen atom, a substituted or unsubstituted alkyl group, a substituted or unsubstituted aryl group, a substituted or unsubstituted alkoxy group, a substituted or unsubstituted aryloxy group, a substituted or unsubstituted amino group, a substituted or unsubstituted acylamino group, a substituted or unsubstituted alkoxycarbonylamino group, a substituted or unsubstituted alkylsulfonylamino group, a substituted or unsubstituted arylsulfonylamino group, a substituted or unsubstituted alkylureido group, a substituted or unsubstituted arylureido group, a sulfo group, a carboxyl group, or a halogen atom, more preferably a hydrogen atom, a substituted or unsubstituted alkyl group, or a sulfo group, and particularly preferably a substituted or unsubstituted alkyl group. As the alkyl group, an alkyl group having 1 to 6 carbon atoms is preferable, an alkyl group having 1 to 3 carbon atoms is more preferable, and a methyl group is still more preferable. In addition, in a case each group has a substituent, the substituent is selected from, for example, the substituent group A.

In Formula (1) and Formula (2), $X^1$, $X^2$, $X^3$, and $X^4$ each independently represent a hydroxyl group, a substituted or unsubstituted alkoxy group, a substituted or unsubstituted aryloxy group, a substituted or unsubstituted heterocyclic oxy group, a substituted or unsubstituted alkylamino group, a substituted or unsubstituted arylamino group, a substituted or unsubstituted heterylamino group, a substituted or unsubstituted carbonylamino group, a substituted or unsubstituted acyloxy group, a substituted or unsubstituted aminocarbonyloxy group, a substituted or unsubstituted sulfonylamino group, a substituted or unsubstituted alkoxycarbonylamino group, a substituted or unsubstituted aryloxycarbonylamino group, a substituted or unsubstituted ureido group, a substituted or unsubstituted alkylthio group, or a substituted or unsubstituted arylthio group.

In a case where $X^1$, $X^2$, $X^3$, and $X^4$ represent substituted or unsubstituted alkoxy group, as the alkoxy group, an alkoxy group having 1 to 18 carbon atoms is preferable, and an alkoxy group having 1 to 8 carbon atoms is more preferable. The alkoxy group may be linear, branched, or cyclic. Specifically, as the alkoxy group, a methoxy group, an ethoxy group, a propyloxy group, an isopropyloxy group, a cyclohexyloxy group, or a 2-ethylhexyloxy group is preferable. In addition, in a case where the alkoxy group has a substituent, the substituent is selected from, for example, the substituent group A. As the substituent, an ionic hydrophilic group is preferable, a carboxyl group or a sulfo group is more preferable, and a carboxyl group is still more preferable.

In a case where $X^1$, $X^2$, $X^3$, and $X^4$ represent a substituted or unsubstituted aryloxy group, as the aryloxy group, an aryloxy group having 6 to 14 carbon atoms is preferable, an aryloxy group having 6 to 10 carbon atoms is more preferable, and a phenyloxy group is still more preferable. In addition, in a case where the aryloxy group has a substituent, the substituent is selected from, for example, the substituent group A. As the substituent, an ionic hydrophilic group is preferable, a carboxyl group or a sulfo group is more preferable, and a carboxyl group is still more preferable.

In a case where $X^1$, $X^2$, $X^3$, and $X^4$ represent a substituted or unsubstituted heterocyclic oxy group, as a heterocyclic group included in the heterocyclic oxy group, a triazine group, a thiazolyl group, a benzothiazolyl group, or a thiadiazolyl group is preferable. In addition, in a case the heterocyclic oxy group has a substituent, the substituent is selected from, for example, the substituent group A. As the substituent, a substituted or unsubstituted amino group or a substituted or unsubstituted sulfamoyl group is preferable, a substituted or unsubstituted alkylamino group or a substituted or unsubstituted alkylsulfamoyl group is more preferable, and an alkylamino group or alkylsulfamoyl group which is substituted with an ionic hydrophilic group (preferably a carboxyl group or a sulfo group, more preferably a carboxyl group) is particularly preferable.

In a case where $X^1$, $X^2$, $X^3$, and $X^4$ represent a substituted or unsubstituted alkylamino group, the alkylamino group may be a dialkylamino group or a monoalkylamino group. From the viewpoint of synthesis easiness and solubility in water, it is preferable that the alkylamino group is a monoalkylamino group. The alkyl group in the alkylamino group is preferably an alkyl group having 1 to 8 carbon atoms and more preferably an alkyl group having 1 to 3 carbon atoms. In addition, in a case where the alkylamino group has a substituent, the substituent is selected from, for example, the substituent group A.

In a case where $X^1$, $X^2$, $X^3$, and $X^4$ represent a substituted or unsubstituted arylamino group, the arylamino group may be a diarylamino group or a monoarylamino group. From the viewpoint of synthesis easiness and solubility in water, it is preferable that the arylamino group is a monoarylamino group. As the arylamino group, an arylamino group having 6 to 14 carbon atoms is preferable, an arylamino group having 6 to 10 carbon atoms is more preferable, and a phenylamino group is still more preferable. In addition, in a case where the arylamino group has a substituent, the substituent is selected from, for example, the substituent group A.

In a case where $X^1$, $X^2$, $X^3$, and $X^4$ represent a substituted or unsubstituted heterylamino group, as a heterocyclic group included in the heterylamino group, a triazine group, a thiazolyl group, a benzothiazolyl group, or a thiadiazolyl group is preferable. In addition, in a case where the heterylamino group has a substituent, the substituent is selected from, for example, the substituent group A and is preferably a substituted or unsubstituted amino group or a substituted or unsubstituted sulfamoyl group.

In a case where $X^1$, $X^2$, $X^3$, and $X^4$ represent a substituted or unsubstituted carbonylamino group, as the

substituted carbonylamino group, a substituted or unsubstituted alkylcarbonylamino group or a substituted or unsubstituted arylcarbonylamino group is preferable. In a case where $X^1$, $X^2$, $X^3$, and $X^4$ represent an unsubstituted carbonylamino group, the unsubstituted carbonylamino group is -NHCO- and is preferably bonded to $L^1$ in Formula (3) or $L^2$ in Formula (4).

In a case where $X^1$, $X^2$, $X^3$, and $X^4$ represent a substituted or unsubstituted alkylcarbonylamino group, the alkylcarbonylamino group may be a dialkylcarbonylamino group or a monoalkylcarbonylamino group, and is preferably a monoalkylcarbonylamino group from the viewpoint of synthesis easiness and solubility in water. The alkyl group in the alkylcarbonylamino group is preferably an alkyl group having 1 to 8 carbon atoms and more preferably an alkyl group having 1 to 3 carbon atoms. In addition, in a case where the alkylcarbonylamino group has a substituent, the substituent is selected from, for example, the substituent group A.

In a case where $X^1$, $X^2$, $X^3$, and $X^4$ represent a substituted or unsubstituted arylcarbonylamino group, the arylcarbonylamino group may be a diarylcarbonylamino group or a monoarylcarbonylamino, and is preferably a monoarylcarbonylamino group from the viewpoint of synthesis easiness and solubility in water. The aryl group in the arylcarbonylamino group is preferably an aryl group having 6 to 14 carbon atoms and more preferably an aryl group having 6 to 10 carbon atoms. Specifically, a phenyl group, a biphenyl group, or a naphthyl group is preferable, and a phenyl group is more preferable. In addition, in a case where the arylcarbonylamino group has a substituent, the substituent is selected from, for example, the substituent group A, and is preferably a carboxyl group, a hydroxyl group, a phosphono group, or an alkoxy group (preferably an alkoxy group having 1 to 6 carbon atoms, and more preferably a cyclohexyloxy group).

In a case where $X^1$, $X^2$, $X^3$, and $X^4$ represent substituted or unsubstituted acyloxy group, as the acyloxy group, an acyloxy group having 1 to 18 carbon atoms is preferable, and an acyloxy group having 1 to 8 carbon atoms is more preferable. Specific examples of the acyloxy group include an acetyloxy group and a benzoyloxy group. Among these, an acetyloxy group is preferable. In addition, in a case where the acyloxy group has a substituent, the substituent is selected from, for example, the substituent group A. As the substituent, an ionic hydrophilic group is preferable, a carboxyl group or a sulfo group is more preferable, and a carboxyl group is still more preferable.

In a case where $X^1$, $X^2$, $X^3$, and $X^4$ represent a substituted or unsubstituted aminocarbonyloxy group, as the aminocarbonyloxy group, an aminocarbonyloxy group having 1 to 18 carbon atoms is preferable, and an aminocarbonyloxy group having 1 to 8 carbon atoms is more preferable. Specific examples of the aminocarbonyloxy group include an unsubstituted aminocarbonyloxy group, a dimethylaminocarbonyloxy group, and a phenylaminocarbonyloxy group. Among these, an unsubstituted aminocarbonyloxy group or a dimethylaminocarbonyloxy group is preferable. In addition, in a case where the aminocarbonyloxy group has a substituent, the substituent is selected from, for example, the substituent group A. As the substituent, an ionic hydrophilic group is preferable, a carboxyl group or a sulfo group is more preferable, and a carboxyl group is still more preferable.

In a case where $X^1$, $X^2$, $X^3$, and $X^4$ represent a substituted or unsubstituted sulfonylamino group, as the substituted sulfonylamino group, a substituted or unsubstituted alkylsulfonylamino group or a substituted or unsubstituted arylsulfonylamino group is preferable. In a case where $X^1$, $X^2$, $X^3$, and $X^4$ represent an unsubstituted sulfonylamino group, the unsubstituted sulfonylamino group is $-NHSO_2-$ and is preferably bonded to $L^1$ in Formula (3) or $L^2$ in Formula (4).

In a case where $X^1$, $X^2$, $X^3$, and $X^4$ represent a substituted or unsubstituted alkylsulfonylamino group, as the alkylsulfonylamino group, an alkylsulfonylamino group having 1 to 6 carbon atoms is preferable, an alkylsulfonylamino group having 1 to 3 carbon atoms is more preferable, and a methylsulfonylamino group is still more preferable. In addition, in a case where the alkylsulfonylamino group has a substituent, the substituent is selected from, for example, the substituent group A.

In a case where $X^1$, $X^2$, $X^3$, and $X^4$ represent a substituted or unsubstituted arylsulfonylamino group, as the arylsulfonylamino group, an arylsulfonylamino group having 6 to 14 carbon atoms is preferable, an arylsulfonylamino group having 6 to 10 carbon atoms is more preferable, and a phenylsulfonylamino group is still more preferable. In a case where the arylsulfonylamino group has a substituent, the substituent is selected from, for example, the substituent group A and is preferably a carboxyl group.

In a case where $X^1$, $X^2$, $X^3$, and $X^4$ represent a substituted or unsubstituted alkoxycarbonylamino group, as an alkoxy group included in the alkoxycarbonylamino group, an alkoxy group having 1 to 8 carbon atoms is preferable, and an alkoxy group having 1 to 3 carbon atoms is more preferable. The alkoxycarbonylamino group may be linear, branched, or cyclic. In addition, in a case where the alkoxycarbonylamino group has a substituent, the substituent is selected from, for example, the substituent group A.

In a case where $X^1$, $X^2$, $X^3$, and $X^4$ represent a substituted or unsubstituted aryloxycarbonylamino group, as an aryloxy group included in the aryloxycarbonylamino group, an aryloxy group having 6 to 14 carbon atoms is preferable, and an aryloxy group having 6 to 10 carbon atoms is more preferable. As the aryloxycarbonylamino group, a phenyloxycarbonylamino group is more preferable. In addition, in a case where the aryloxycarbonylamino group has a substituent, the substituent is selected from, for example, the substituent group A.

In a case where $X^1$, $X^2$, $X^3$, and $X^4$ represent a substituted or unsubstituted ureido group, a substituent included in the substituted ureido group is selected from, for example, the substituent group A. As the substituent, a heterocyclic group, an alkyl group, or an aryl group is preferable, and an alkyl group or an aryl group is more preferable. The substituted

ureido group may be a disubstituted ureido group or a monosubstituted ureido group. From the viewpoint of synthesis easiness and solubility in water, it is preferable that the substituted ureido group is a monosubstituted ureido group.

In a case where $X^1$, $X^2$, $X^3$, and $X^4$ represent a substituted or unsubstituted alkylthio group, as the alkylthio group, an alkylthio group having 1 to 18 carbon atoms is preferable, and an alkylthio group having 1 to 8 carbon atoms is more preferable. Specific examples of the alkylthio group include a methylthio group, an ethylthio group, and a propylthio group. Among these, a methylthio group or an ethylthio group is preferable, and a methylthio group is more preferable. In addition, in a case where the alkylthio group has a substituent, the substituent is selected from, for example, the substituent group A. As the substituent, an ionic hydrophilic group is preferable, a carboxyl group or a sulfo group is more preferable, and a carboxyl group is still more preferable.

In a case where $X^1$, $X^2$, $X^3$, and $X^4$ represent a substituted or unsubstituted arylthio group, as the arylthio group, an arylthio group having 6 to 14 carbon atoms is preferable, an arylthio group having 6 to 10 carbon atoms is more preferable, and a phenylthio group is still more preferable. In addition, in a case where the arylthio group has a substituent, the substituent is selected from, for example, the substituent group A. As the substituent, an ionic hydrophilic group is preferable, a carboxyl group or a sulfo group is more preferable, and a carboxyl group is still more preferable.

From the viewpoints of saturation and light fastness, $X^1$, $X^2$, $X^3$, and $X^4$ represent preferably a hydroxyl group, a substituted or unsubstituted amino group, a substituted or unsubstituted carbonylamino group, a substituted or unsubstituted acyloxy group, a substituted or unsubstituted sulfonylamino group, or a substituted or unsubstituted ureido group; more preferably a substituted or unsubstituted alkylamino group, a substituted or unsubstituted arylamino group, a substituted or unsubstituted heterylamino group, a substituted or unsubstituted carbonylamino group, a substituted or unsubstituted alkylsulfonylamino group, a substituted or unsubstituted arylsulfonylamino group, or a substituted or unsubstituted ureido group; and still more preferably a substituted or unsubstituted alkylcarbonylamino group, a substituted or unsubstituted arylcarbonylamino group, a substituted or unsubstituted alkylsulfonylamino group, a substituted or unsubstituted arylsulfonylamino group, or a substituted or unsubstituted ureido group.

$M^1$, $M^2$, $M^3$, and $M^4$ each independently represent a hydrogen atom or an alkali metal. Examples of the alkali metal include lithium, sodium, and potassium. From the viewpoint of raw material availability, sodium or potassium is preferable, and sodium is preferable.

In addition, from the viewpoint of solubility in water, it is preferable that at least one of n1 or n2 in Formula (1) represents 1, or at least one of $R^1$, $R^3$, $R^4$, $R^5$, $R^6$, $R^8$, $R^9$, $R^{10}$, $X^1$, or $X^2$ in Formula (1) has an ionic hydrophilic group such as a carboxyl group, a sulfo group, or a phosphono group. Furthermore, i it is preferable that at least one of n3 or n4 in Formula (2) represents 1, or at least one of $R^{11}$, $R^{12}$, $R^{14}$, $R^{15}$, $R^{16}$, $R^{17}$, $R^{19}$, $R^{20}$, $X^3$, or $X^4$ in Formula (2) has an ionic hydrophilic group such as a carboxyl group, a sulfo group, or a phosphono group. The compound becomes soluble in water by having an ionic hydrophilic group. Examples of a counter cation of the ionic hydrophilic group include a hydrogen atom (proton), an alkali metal cation (a lithium ion, a sodium ion, or a potassium ion), and an ammonium ion.

The amount of the compound represented by Formula (1) or Formula (2) dissolved in water at 25°C is preferably 1 to 70 mass% and more preferably 2 to 50 mass% with respect to the amount of water. The number of ionic hydrophilic groups in the compound represented by Formula (1) or Formula (2) is preferably 1 to 9 and more preferably 1 to 5.

From the viewpoints of saturation and light fastness, it is preferable that the compound represented by Formula (1) or Formula (2) is a compound represented by the following Formula (1-1) or Formula (2-1).

Formula (1-1)

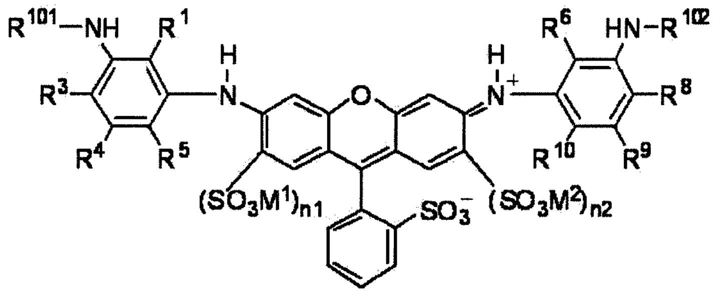

Formula (2-1)

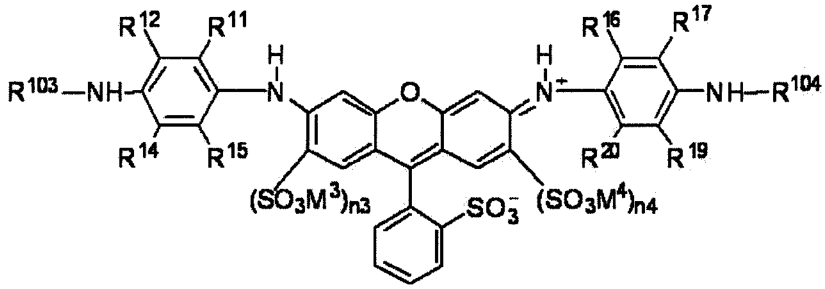

In Formula (1-1) and Formula (2-1), $R^1$, $R^3$, $R^4$, $R^5$, $R^6$, $R^8$, $R^9$, $R^{10}$, $R^{11}$, $R^{12}$, $R^{14}$, $R^{15}$, $R^{16}$, $R^{17}$, $R^{19}$, and $R^{20}$ each independently represent a hydrogen atom or a substituent, $R^{101}$, $R^{102}$, $R^{103}$, and $R^{104}$ each independently represent a substituted or unsubstituted alkyl group, a substituted or unsubstituted aryl group, a substituted or unsubstituted heterocyclic group, a substituted or unsubstituted carbonyl group, a substituted or unsubstituted sulfonyl group, a substituted or unsubstituted alkoxycarbonyl group, a substituted or unsubstituted aryloxycarbonyl group, a carbamoyl group, a substituted or unsubstituted monoalkylaminocarbonyl group, a substituted or unsubstituted dialkylaminocarbonyl group, a substituted or unsubstituted monoarylaminocarbonyl group, a substituted or unsubstituted diarylaminocarbonyl group, or a substituted or unsubstituted alkylarylaminocarbonyl group, $M^1$, $M^2$, $M^3$, and $M^4$ each independently represent a hydrogen atom or an alkali metal, and n1, n2, n3, and n4 each independently represent 0 or 1.

$R^1$, $R^3$, $R^4$, $R^5$, $R^6$, $R^8$, $R^9$, $R^{10}$, $R^{11}$, $R^{12}$, $R^{14}$, $R^{15}$, $R^{16}$, $R^{17}$, $R^{19}$, $R^{20}$, $M^1$, $M^2$, $M^3$, $M^4$, n1, n2, n3, and n4 in Formula (1-1) and Formula (2-1) have the same specific examples and the same preferable ranges as $R^1$, $R^3$, $R^4$, $R^5$, $R^6$, $R^8$, $R^9$, $R^{10}$, $R^{11}$, $R^{12}$, $R^{14}$, $R^{15}$, $R^{16}$, $R^{17}$, $R^{19}$, $R^{20}$, $M^1$, $M^2$, $M^3$, $M^4$, n1, n2, n3, and n4 in Formula (1) and Formula (2).

In a case where $R^{101}$, $R^{102}$, $R^{103}$, and $R^{104}$ represent a substituted or unsubstituted alkyl group, as the alkyl group, an alkyl group having 1 to 8 carbon atoms is preferable, and an alkyl group having 1 to 3 carbon atoms is more preferable. In addition, in a case where the alkyl group has a substituent, the substituent is selected from, for example, the substituent group A.

In a case where $R^{101}$, $R^{102}$, $R^{103}$, and $R^{104}$ represent a substituted or unsubstituted aryl group, as the aryl group, an aryl group having 6 to 14 carbon atoms is preferable, an aryl group having 6 to 10 carbon atoms is more preferable, and a phenyl group is still more preferable. In addition, in a case where the aryl group has a substituent, the substituent is selected from, for example, the substituent group A.

In a case where $R^{101}$, $R^{102}$, $R^{103}$, and $R^{104}$ represent a substituted or unsubstituted heterocyclic group, as the heterocyclic group, a triazine group, a thiazolyl group, a benzothiazolyl group, or a thiadiazolyl group is preferable. In addition, in a case where the heterocyclic group has a substituent, the substituent is selected from, for example, the substituent group A and is preferably a substituted or unsubstituted amino group or a substituted or unsubstituted sulfamoyl group.

In a case where $R^{101}$, $R^{102}$, $R^{103}$, and $R^{104}$ represent a substituted or unsubstituted carbonyl group, as the substituted carbonyl group, a substituted or unsubstituted alkylcarbonyl group or a substituted or unsubstituted arylcarbonyl group is preferable. In a case where $R^{101}$, $R^{102}$, $R^{103}$, and $R^{104}$ represent an unsubstituted carbonyl group, the unsubstituted carbonyl group is -CO- and is preferably bonded to $L^1$ in Formula (3) or $L^2$ in Formula (4).

In a case where $R^{101}$, $R^{102}$, $R^{103}$, and $R^{104}$ represent a substituted or unsubstituted alkylcarbonyl group, as an alkyl group included in the alkylcarbonyl group, an alkyl group having 1 to 8 carbon atoms is preferable, and an alkyl group having 1 to 3 carbon atoms is more preferable. In addition, in a case where the alkylcarbonyl group has a substituent, the substituent is selected from, for example, the substituent group A.

In a case where $R^{101}$, $R^{102}$, $R^{103}$, and $R^{104}$ represent a substituted or unsubstituted arylcarbonyl group, as an aryl group included in the arylcarbonyl group, an aryl group having 6 to 14 carbon atoms is preferable, and an aryl group having 6 to 10 carbon atoms is more preferable. As the arylcarbonyl group, specifically, a phenylcarbonyl group, a biphenylcarbonyl group, or a naphtylcarbonyl group is preferable, and a phenylcarbonyl group is more preferable. In addition, in a case where the arylcarbonyl group has a substituent, the substituent is selected from, for example, the substituent group A, and is particularly preferably a carboxyl group, a hydroxyl group, a phosphono group, or an alkoxy group (preferably an alkoxy group having 1 to 6 carbon atoms, and more preferably a cyclohexyloxy group).

In a case where $R^{101}$, $R^{102}$, $R^{103}$, and $R^{104}$ represent a substituted or unsubstituted sulfonyl group, as the substituted sulfonyl group, a substituted or unsubstituted alkylsulfonyl group or a substituted or unsubstituted arylsulfonyl group is preferable. In a case where $R^{101}$, $R^{102}$, $R^{103}$, and $R^{104}$ represent an unsubstituted sulfonyl group, the unsubstituted sulfonyl group is $-SO_{2-}$ and is preferably bonded to $L^1$ in Formula (3) or $L^2$ in Formula (4).

In a case where $R^{101}$, $R^{102}$, $R^{103}$, and $R^{104}$ represent a substituted or unsubstituted alkylsulfonyl group, as the

alkylsulfonyl group, an alkylsulfonyl group having 1 to 6 carbon atoms is preferable, an alkylsulfonyl group having 1 to 3 carbon atoms is more preferable, and a methylsulfonyl group is still more preferable. In addition, in a case where the alkylsulfonyl group has a substituent, the substituent is selected from, for example, the substituent group A.

In a case where $R^{101}$, $R^{102}$, $R^{103}$, and $R^{104}$ represent a substituted or unsubstituted arylsulfonyl group, as the arylsulfonyl group, an arylsulfonyl group having 6 to 14 carbon atoms is preferable, an arylsulfonyl group having 6 to 10 carbon atoms is more preferable, and a phenylsulfonyl group is still more preferable. In a case where the arylsulfonyl group has a substituent, the substituent is selected from, for example, the substituent group A and is preferably a carboxyl group.

In a case where $R^{101}$, $R^{102}$, $R^{103}$, and $R^{104}$ represent a substituted or unsubstituted alkoxycarbonyl group, as an alkoxy group included in the alkoxycarbonyl group, an alkoxy group having 1 to 8 carbon atoms is preferable, and an alkoxy group having 1 to 3 carbon atoms is more preferable. In addition, in a case where the alkoxycarbonyl group has a substituent, the substituent is selected from, for example, the substituent group A.

In a case where $R^{101}$, $R^{102}$, $R^{103}$, and $R^{104}$ represent a substituted or unsubstituted aryloxycarbonyl group, as an aryloxy group included in the aryloxycarbonyl group, an aryloxy group having 6 to 14 carbon atoms is preferable, and an aryloxy group having 6 to 10 carbon atoms is more preferable. As the aryloxycarbonyl group, a phenyloxycarbonyl group is more preferable. In a case where the aryloxycarbonyl group has a substituent, the substituent is selected from, for example, substituent group A and is preferably a nitro group.

In a case where $R^{101}$, $R^{102}$, $R^{103}$, and $R^{104}$ represent a substituted or unsubstituted monoalkylaminocarbonyl group, it is preferable that the monoalkylaminocarbonyl group is represented by $-CONHR^{203}$. Here, $R^{203}$ represents an alkyl group having 1 to 12 carbon atoms, preferably an alkyl group having 1 to 10 carbon atoms, more preferably an alkyl group having 1 to 6 carbon atoms, still more preferably a methyl group, an ethyl group, an isopropyl group, a hexyl group, a 2-ethylhexyl group, a dodecyl group, or a cyclohexyl group, and particularly preferably an isopropyl group. In addition, in a case where the monoalkylaminocarbonyl group has a substituent, the substituent is selected from, for example, the substituent group A and is particularly preferably a phenyl group, a carboxyl group, a substituted or unsubstituted amino group, or a hydroxyl group.

In a case where $R^{101}$, $R^{102}$, $R^{103}$, and $R^{104}$ represent a substituted or unsubstituted dialkylaminocarbonyl group, it is preferable that the dialkylaminocarbonyl group is represented by $-CONR^{204}R^{205}$. Here, $R^{204}$ and $R^{205}$ each independently represent an alkyl group having 1 to 10 carbon atoms, preferably an alkyl group having 1 to 6 carbon atoms, and more preferably a methyl group or an isopropyl group. In addition, in a case where the dialkylaminocarbonyl group has a substituent, the substituent is selected from, for example, the substituent group A, and is preferably a carboxyl group or an alkyloxycarbonyl group (preferably an alkyloxycarbonyl group having 2 to 6 carbon atoms, and more preferably an ethyloxycarbonyl group).

In a case where $R^{101}$, $R^{102}$, $R^{103}$, and $R^{104}$ represent a substituted or unsubstituted monoarylaminocarbonyl group, it is preferable that the monoarylaminocarbonyl group is represented by $-CONHR^{206}$. Here, $R^{206}$ represents an aryl group having 6 to 14 carbon atoms, preferably an aryl group having 6 to 12 carbon atoms, and more preferably an aryl group having 6 to 10 carbon atoms. Specifically, a phenyl group, a biphenyl group, or a naphthyl group is preferable, and a phenyl group is more preferable. In addition, in a case where the monoarylaminocarbonyl group has a substituent, the substituent is selected from, for example, the substituent group A, and is preferably a carboxyl group, a hydroxyl group, a phosphono group, or an alkoxy group (preferably an alkoxy group having 1 to 6 carbon atoms, and more preferably a cyclohexyloxy group).

In a case where $R^{101}$, $R^{102}$, $R^{103}$, and $R^{104}$ represent a substituted or unsubstituted diarylaminocarbonyl group, it is preferable that the diarylaminocarbonyl group is represented by $-CONR^{207}R^{208}$. Here, $R^{207}$ and $R^{208}$ each independently represent an aryl group having 6 to 14 carbon atoms, preferably an aryl group having 6 to 10 carbon atoms, and more preferably a phenyl group. In addition, in a case where the diarylaminocarbonyl group has a substituent, the substituent is selected from, for example, the substituent group A.

In a case where $R^{101}$, $R^{102}$, $R^{103}$, and $R^{104}$ represent a substituted or unsubstituted alkylarylaminocarbonyl group, it is preferable that the alkylarylaminocarbonyl group is represented by $-CONR^{209}R^{210}$. Here, $R^{209}$ represents an alkyl group having 1 to 12 carbon atoms, preferably an alkyl group having 1 to 10 carbon atoms, more preferably an alkyl group having 1 to 6 carbon atoms, still more preferably a methyl group, an ethyl group, an isopropyl group, a hexyl group, a 2-ethylhexyl group, a dodecyl group, or a cyclohexyl group, and particularly preferably a methyl group. $R^{210}$ represents an aryl group having 6 to 14 carbon atoms, preferably an aryl group having 6 to 12 carbon atoms, and more preferably an aryl group having 6 to 10 carbon atoms. Specifically, a phenyl group, a biphenyl group, or a naphthyl group is preferable, and a phenyl group is more preferable. In addition, in a case where the alkylarylaminocarbonyl group has a substituent, the substituent is selected from, for example, the substituent group A.

$R^{101}$, $R^{102}$, $R^{103}$, and $R^{104}$ each independently represent preferably a substituted or unsubstituted alkyl group, a substituted or unsubstituted aryl group, a substituted or unsubstituted heterocyclic group, a substituted or unsubstituted sulfonyl group, a substituted or unsubstituted alkoxycarbonyl group, a substituted or unsubstituted aryloxycarbonyl group, a carbamoyl group, a substituted or unsubstituted monoalkylaminocarbonyl group, a substituted or unsubstituted dialkylaminocarbonyl group, a substituted or unsubstituted monoarylaminocarbonyl group, a substituted or unsubstituted diarylaminocarbonyl group, or a substituted or unsubstituted alkylarylaminocarbonyl group; and more preferably a substituted or unsubstituted sulfonyl group, a substituted or unsubstituted alkoxycarbonyl group, a substituted or unsubstituted aryloxycarbonyl group, a carbamoyl group, a substituted or unsubstituted monoalkylaminocarbonyl group, a substituted or unsubstituted dialkylaminocarbonyl group, a substituted or unsubstituted monoarylaminocarbonyl group, a substituted or unsubstituted diarylaminocarbonyl group, or a substituted or unsubstituted alkylarylaminocarbonyl group.

(Compound Having Repeating Unit Represented by Formula (3))

Formula (3)

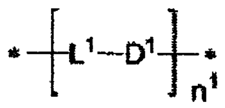

In Formula (3), $L^1$ represents a divalent linking group, and $D^1$ represents a partial structure obtained by removing two hydrogen atoms from the compound represented by Formula (1) or Formula (2). $n^1$ represents 2 to 100.

In Formula (3), $L^1$ represents a divalent linking group and preferably a substituted or unsubstituted alkylene group, a substituted or unsubstituted arylene group, a substituted or unsubstituted alkenylene group, or a divalent linking group which is a combination of two or more kinds selected from the above-described groups.

The alkylene group may be linear, branched, or cyclic. The alkylene group has preferably 1 to 18 carbon atoms, more preferably 2 to 16 carbon atoms, and still more preferably 4 to 8 carbon atoms. Preferable specific examples of the alkylene group include a methylene group, an ethylene group, a propylene group, and a cyclohexylene group (preferably a 1,3-cyclohexylene group or a 1,4-cyclohexylene group). In a case where the alkylene group has a substituent, the substituent is selected from, for example, substituent group A and is preferably a 1,4-cyclohexylene group.

As the arylene group, an arylene group having 6 to 14 carbon atoms is preferable, an arylene group having 6 to 10 carbon atoms is more preferable, and a phenylene group (preferably, a 1,3-phenylene group or a 1,4-phenylene group) or a naphthylene group (preferably a 1,5-naphthylene group) is still more preferable. In addition, in a case where the aryloxy group has a substituent, the substituent is selected from, for example, the substituent group A. As the substituent, an ionic hydrophilic group is preferable, a carboxyl group or a sulfo group is more preferable, and a sulfo group is still more preferable.

As the alkenylene group, an alkenylene group having 2 to 18 carbon atoms is preferable, an alkenylene group having 2 to 12 carbon atoms is more preferable, and an alkenylene group having 2 to 8 carbon atoms is still more preferable. Preferable specific examples of the alkenylene group include a vinylene group and a 2-butenylene group. In a case where the alkenylene group has a substituent, the substituent is selected from, for example, substituent group A and is preferably an alkyl group.

In addition, $L^1$ may represent the above-described divalent linking group which is a combination of two or more kinds selected from a substituted or unsubstituted alkylene group, a substituted or unsubstituted arylene group, and a substituted or unsubstituted alkenylene group.

Specific examples of the divalent linking group are the following linking groups. In the following linking groups, * represents a binding site.

$*-(CH_2)_2-*$ $*-(CH_2)_3-*$ $*-(CH_2)_4-*$ $*-(CH_2)_5-*$ $*-(CH_2)_6-*$

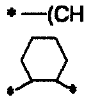 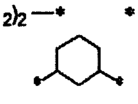 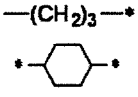 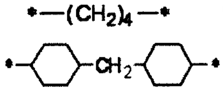 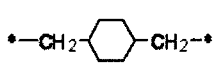 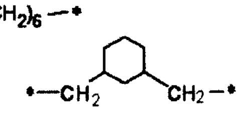

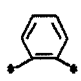 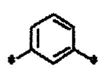 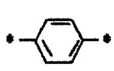 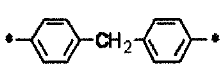 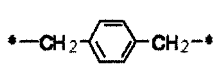 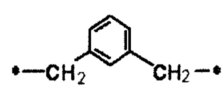

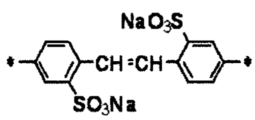 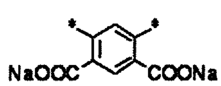 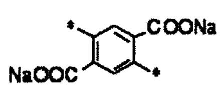

In Formula (3), $D^1$ represents a partial structure obtained by removing two hydrogen atoms from the compound represented by Formula (1) or Formula (2). Formula (1) and Formula (2) are as described above.

From the viewpoint of solubility, it is preferable that at least one of $R^1$, $R^3$, $R^4$, $R^5$, $R^6$, $R^8$, $R^9$, or $R^{10}$ in the partial structure represented by $D^1$ which is obtained by removing two hydrogen atoms from the compound represented by Formula (1), and at least one of $R^{11}$, $R^{12}$, $R^{14}$, $R^{15}$, $R^{16}$, $R^{17}$, $R^{19}$, or $R^{20}$ in the partial structure which is obtained by removing two hydrogen atoms from the compound represented by Formula (2) have an ionic hydrophilic group such as a carboxyl group, a sulfo group, or a phosphono group, and it is more preferable that at least two have an ionic hydrophilic group. As the ionic hydrophilic group, a sulfo group is preferable. Examples of a counter cation of the ionic hydrophilic group include a hydrogen atom (proton), an alkali metal cation (a lithium ion, a sodium ion, or a potassium ion), and an ammonium ion. From the viewpoint of synthesis easiness (easy handleability of dye powder), the counter cation of the ionic hydrophilic group is preferably an alkali metal cation.

In addition, from the viewpoint of solubility, an aspect in which at least one of n1 or n2 in the compound represented by Formula (1) is 1, and at least one of n3 or n4 in the compound represented by Formula (2) is 1 is also preferable, and an aspect in which both n1 and n2 in the compound represented by Formula (1) is 1, and both n3 and n4 in the compound represented by Formula (2) is 1 is more preferable.

In Formula (3), $n^1$ represents 2 to 100. From the viewpoints of solubility and moisture fastness, $n^1$ represents preferably 2 to 50, more preferably 2 to 30, and still more preferably 2 to 15. It is not necessary that $n^1$ represents an integer. In a case where $n^1$ represents a decimal point, the decimal point is an average of a mixture and is calculated from molecular weight determination by gel permeation chromatography (GPC). In GPC described in this specification, unless specified otherwise, HLC-8020GPC (manufactured by Tosoh Corporation) is used, and TSKgel Super HZM-H, TSKgel Super HZ4000, or TSKgel Super HZ200 (manufactured by Tosoh Corporation) is used as a column. The number average molecular weight is calculated in terms of polystyrene. A carrier may be appropriately selected as long as it is dissolved, and tetrahydrofuran is used.

In addition, a terminal structure of the compound having the repeating unit represented by Formula (3) is not particularly limited and is formed of a compound used for synthesis.

From the viewpoints of saturation and light fastness, it is preferable that Formula (3) is a compound having a repeating unit represented by any one of the following Formulae (3-1) to (3-4).

Formulae (3-1)

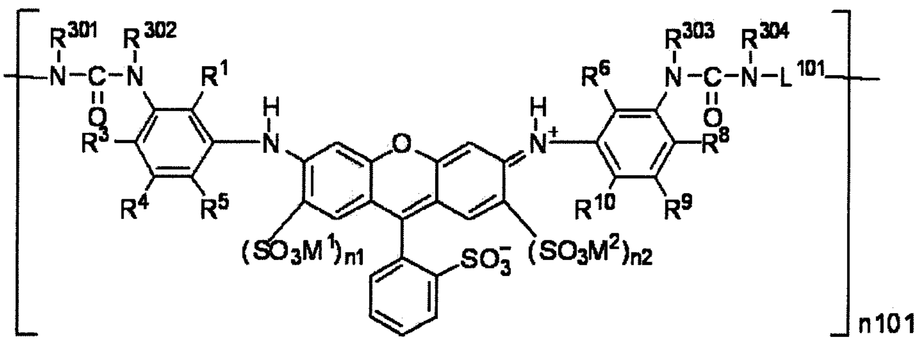

In Formula (3-1), $R^1$, $R^3$, $R^4$, $R^5$, $R^6$, $R^8$, $R^9$, $R^{10}$, $R^{301}$, $R^{302}$, $R^{303}$, and $R^{304}$ each independently represent a hydrogen atom or a substituent, $L^{101}$ represents a divalent linking group, $M^1$ and $M^2$ each independently represent a hydrogen atom or an alkali metal, n1 and n2 each independently represent 0 or 1, and n101 represents 2 to 100.

n101 in Formula (3-1) has the same definition and the same preferable ranges as $n^1$ in Formula (3).

$L^{101}$ in Formula (3-1) has the same definition, the same specific example, and the same preferable ranges as $L^1$ in Formula (3).

$R^1$, $R^3$, $R^4$, $R^5$, $R^6$, $R^8$, $R^9$, $R^{10}$, $M^1$, $M^2$, n1, and n2 in Formula (3-1) have the same definitions, the same specific examples, and the same preferable ranges as $R^1$, $R^3$, $R^4$, $R^5$, $R^6$, $R^8$, $R^9$, $R^{10}$, $M^1$, $M^2$, n1, and n2 in Formula (1).

In addition, from the viewpoint of solubility, it is preferable that at least one of $R^1$, $R^3$, $R^4$, $R^5$, $R^6$, $R^8$, $R^9$, or $R^{10}$ in Formula (3-1) has an ionic hydrophilic group such as a carboxyl group, a sulfo group, or a phosphono group, and it is more preferable that at least two have an ionic hydrophilic group. As the ionic hydrophilic group, a sulfo group is preferable. Examples of a counter cation of the ionic hydrophilic group include a hydrogen atom (proton), an alkali metal cation (a lithium ion, a sodium ion, or a potassium ion), and an ammonium ion. From the viewpoint of synthesis easiness (easy handleability of dye powder), the counter cation of the ionic hydrophilic group is preferably an alkali metal cation.

In addition, from the viewpoint of solubility, an aspect in which at least one of n1 or n2 in the compound represented by Formula (3-1) is 1 is also preferable, and an aspect in which both n1 and n2 in the compound represented

by Formula (3-1) is 1 is more preferable.

In Formula (3-1), $R^{301}$, $R^{302}$, $R^{303}$, and $R^{304}$ each independently represent a hydrogen atom or a substituent. From the viewpoint of raw material availability, a hydrogen atom, a substituted or unsubstituted alkyl group, or a substituted or unsubstituted aryl group is preferable, a hydrogen atom or a substituted or unsubstituted alkyl group is more preferable, a hydrogen atom or an alkyl group having 1 to 6 carbon atoms is still more preferable, and a hydrogen atom is most preferable.

Formula (3-2):

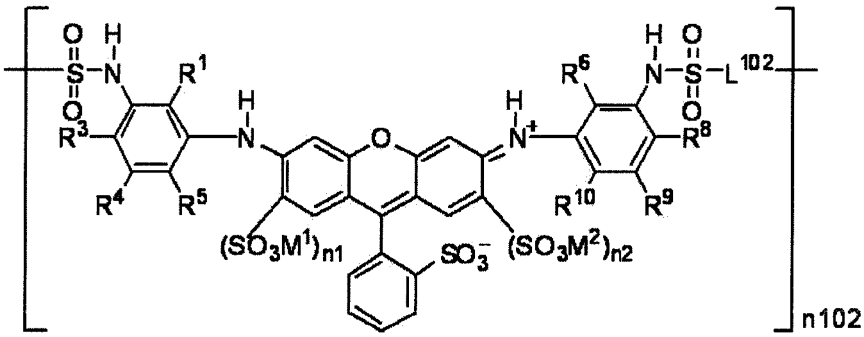

In Formula (3-2), $R^1$, $R^3$, $R^4$, $R^5$, $R^6$, $R^8$, $R^9$, and $R^{10}$ each independently represent a hydrogen atom or a substituent, $L^{102}$ represents a divalent linking group, $M^1$ and $M^2$ each independently represent a hydrogen atom or an alkali metal, n1 and n2 each independently represent 0 or 1, and n102 represents 2 to 100.

$R^1$ $R^3$, $R^4$, $R^5$, $R^6$, > $R^8$, > $R^9$, $R^{10}$, $L^{102}$, $M^1$, $M^2$, n1, n2, and n102 in Formula (3-2) have the same definitions and the same preferable ranges as $R^1$, $R^3$, $R^4$, $R^5$, $R^6$, $R^8$, $R^9$, $R^{10}$, $L^{101}$, $M^1$, $M^2$, n1, n2, and n101 in Formula (3-1).

Formula (3-3):

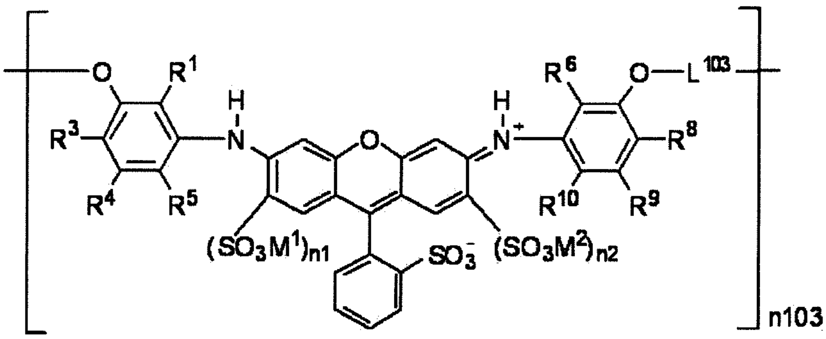

In Formula (3-3), $R^1$, $R^3$, $R^4$, $R^5$, $R^6$, $R^8$, $R^9$, and $R^{10}$ each independently represent a hydrogen atom or a substituent, $L^{103}$ represents a divalent linking group, $M^1$ and $M^2$ each independently represent a hydrogen atom or an alkali metal, n1 and n2 each independently represent 0 or 1, and n103 represents 2 to 100.

$R^1$, $R^3$, $R^4$, $R^5$, $R^6$, $R^8$, $R^9$, $R^{10}$, $L^{103}$, $M^1$, $M^2$, n1, n2, and n103 in Formula (3-3) have the same definitions and the same preferable ranges as $R^1$, $R^3$, $R^4$ $R^5$, $R^6$, $R^8$, $R^9$ $R^{10}$, $L^{101}$, $L^1$, $M^2$, n1, n2, and n101 in Formula (3-1).

Formula (3-4)

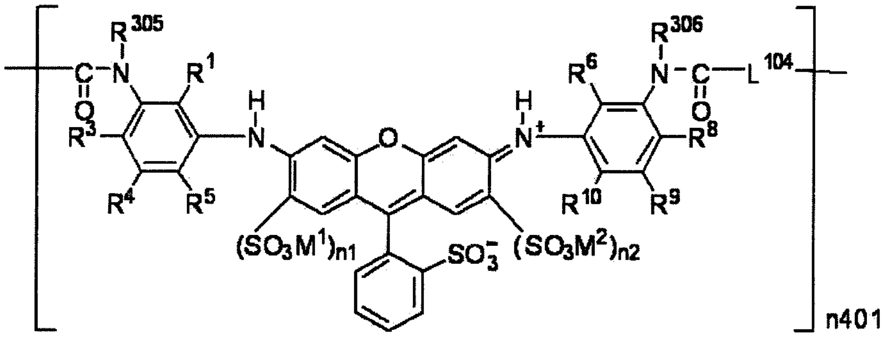

In Formula (3-4), $R^1$, $R^3$, $R^4$, $R^5$, $R^6$, $R^8$, $R^9$, $R^{10}$, $R^{305}$, and $R^{306}$ each independently represent a hydrogen atom or a substituent, $L^{104}$ represents a divalent linking group, $M^1$ and $M^2$ each independently represent a hydrogen atom or an alkali metal, n1 and n2 each independently represent 0 or 1, and n401 represents 2 to 100.

$R^1$, $R^3$, $R^4$, $R^5$, $R^6$, $R^8$, $R^9$, $R^{10}$, $L^{104}$ $M^1$, $M^2$, n1, n2, and n401 in Formula (3-4) have the same definitions and the same preferable ranges as $R^1$, $R^3$, $R^4$, $R^5$, $R^6$, $R^8$, $R^9$, $R^{10}$, $L^{101}$, $M^1$, $M^2$, n1, n2, and n101 in Formula (3-1).

$R^{305}$ and $R^{306}$ in Formula (3-4) have the same definitions and the same preferable ranges as $R^{302}$ and $R^{303}$ in Formula (3-1), respectively.

(Compound Represented by Formula (4))

Formula (4) $L^2[D^2]_{n2}$

In Formula (4), $L^2$ represents an $n^2$-valent linking group, and $D^2$ represents a partial structure obtained by removing one hydrogen atom from the compound represented by Formula (1) or Formula (2). $n^2$ represents an integer of 2 to 6.

In Formula (4), $L^2$ represents an $n^2$-valent linking group, a substituted or unsubstituted alkylene group, a substituted or unsubstituted arylene group, a substituted or unsubstituted alkenylene group, an ether group, a triazine group, a cyanuric group, an amino group, a pentaerythritol derivative, a dipentaerythritol derivative, or a divalent to hexavalent linking group which is a combination of two or more kinds selected from the above-described groups.

$L^2$ in Formula (4) which represents an alkylene group, an arylene group, or an alkenylene group has the same specific examples and the same preferable ranges as $L^1$ in Formula (3) which represents an alkylene group, an arylene group, or an alkenylene group.

Specific examples of the linking group represented by $L^2$ are the following linking groups. In the following linking groups, * represents a binding site.

$*-(CH_2)_2-*$ $*-(CH_2)_3-*$ $*-(CH_2)_4-*$ $*-(CH_2)_5-*$ $*-(CH_2)_6-*$

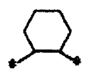 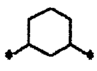 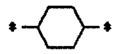 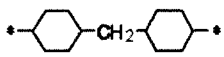 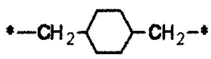 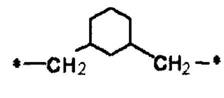

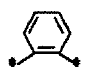 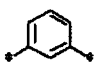 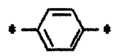 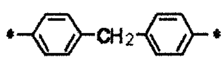 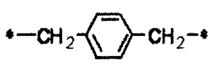 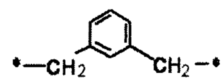

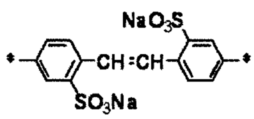 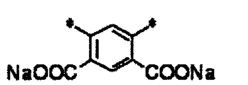 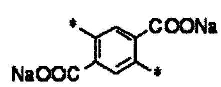

$*-(CH_2)_2-O-(CH_2)_2-*$ $*-(CH_2)_3-O-(CH_2)_3-*$ $*-(CH_2)_4-O-(CH_2)_4-*$

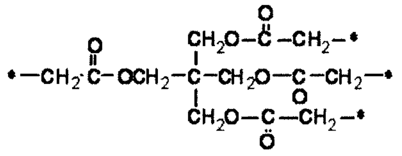
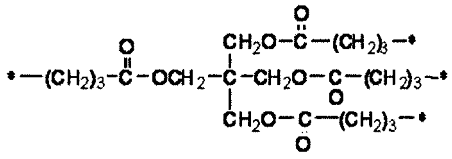

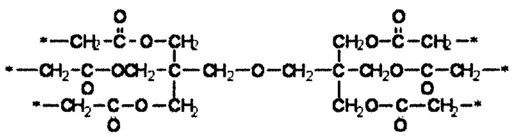
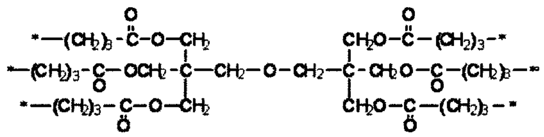

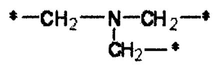
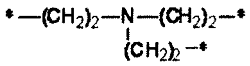
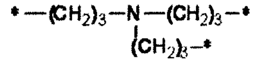
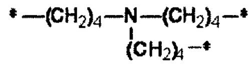

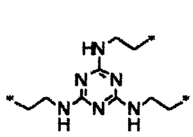
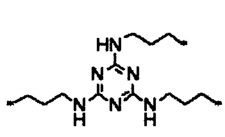
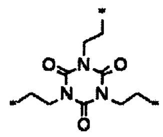
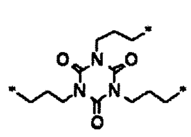

In Formula (4), $D^2$ represents a partial structure obtained by removing one hydrogen atom from the compound represented by Formula (1) or Formula (2). Formula (1) or Formula (2) is as described above.

From the viewpoint of solubility, it is preferable that at least one of $R^1$, $R^3$, $R^4$, $R^5$, $R^6$, $R^8$, $R^9$, or $R^{10}$ in the partial structure represented by $D^2$ which is obtained by removing one hydrogen atom from the compound represented by Formula (1), and at least one of $R^{11}$, $R^{12}$, $R^{14}$, $R^{15}$, $R^{16}$, $R^{17}$, $R^{19}$, or $R^{20}$ in the partial structure which is obtained by removing two hydrogen atoms from the compound represented by Formula (2) have an ionic hydrophilic group such as a carboxyl group, a sulfo group, or a phosphono group, and it is more preferable that at least two have an ionic hydrophilic group. As the ionic hydrophilic group, a sulfo group is preferable. Examples of a counter cation of the ionic hydrophilic group include a hydrogen atom (proton), an alkali metal cation (a lithium ion, a sodium ion, or a potassium ion), and an ammonium ion. From the viewpoint of synthesis easiness (easy handleability of dye powder), the counter cation of the ionic hydrophilic group is preferably an alkali metal cation.

In addition, from the viewpoint of solubility, an aspect in which at least one of n1 or n2 in the compound represented by Formula (1) is 1, and at least one of n3 or n4 in the compound represented by Formula (2) is 1 is also preferable, and an aspect in which both n1 and n2 in the compound represented by Formula (1) is 1, and both n3 and n4 in the compound represented by Formula (2) is 1 is more preferable.

In Formula (4), $n^2$ represents an integer of 2 to 6. From the viewpoints of raw material availability, synthesis easiness, and solubility in water, $n^2$ represents preferably 2 or 3 and most preferably 2.

From the viewpoints of saturation and light fastness, it is preferable that the compound represented by Formula (4) is a compound represented by any one of Formulae (4-1) to (4-4).

Formula (4-1)

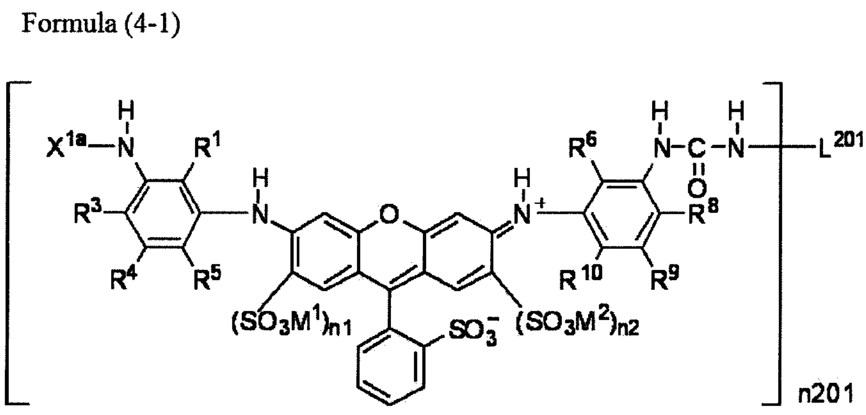

In Formula (4-1), $R^1$, $R^3$, $R^4$, $R^5$, $R^6$, $R^8$, $R^9$, and $R^{10}$ each independently represent a hydrogen atom or a substituent, $X^{1a}$ represents a substituted or unsubstituted alkyl group, a substituted or unsubstituted aryl group, a substituted or unsubstituted heterocyclic group, a substituted or unsubstituted carbonyl group, a substituted or unsubstituted sulfonyl group, a substituted or unsubstituted alkoxycarbonyl group, a substituted or unsubstituted aryloxycarbonyl group, a carbamoyl group, a substituted or unsubstituted monoalkylaminocarbonyl group, a substituted or unsubstituted dialkylaminocarbonyl group, a substituted or unsubstituted monoarylaminocarbonyl group, a substituted or unsubstituted diarylaminocarbonyl group, or a substituted or unsubstituted alkylarylaminocarbonyl group, $M^1$ and $M^2$ each independently represent a hydrogen atom or an alkali metal, n1 and n2 each independently represent 0 or 1, and n201 represents an integer of 2 to 6.

In Formula (4-1), $L^{201}$ represents an n201-valent linking group.

$R^1$, $R^3$, $R^4$, $R^5$, $R^6$, $R^8$, $R^9$, $R^{10}$, $M^1$, $M^2$, n1, and n2 in Formula (4-1) have the same definitions, the same specific examples, and the same preferable ranges as $R^1$, $R^3$, $R^4$, $R^5$, $R^6$, $R^8$, $R^9$, $R^{10}$, $M^1$, $M^2$, n1, and n2 in Formula (1).

$X^{1a}$ in Formula (4-1) has the same definition, the same specific example, and the same preferable ranges as $R^{101}$ in Formula (1-1).

$L^{201}$ in Formula (4-1) has the same definition, the same specific example, and the same preferable ranges as $L^2$ in Formula (4).

n201 in Formula (4-1) has the same definition and the same preferable ranges as $n^2$ in Formula (4).

Formula (4-2)

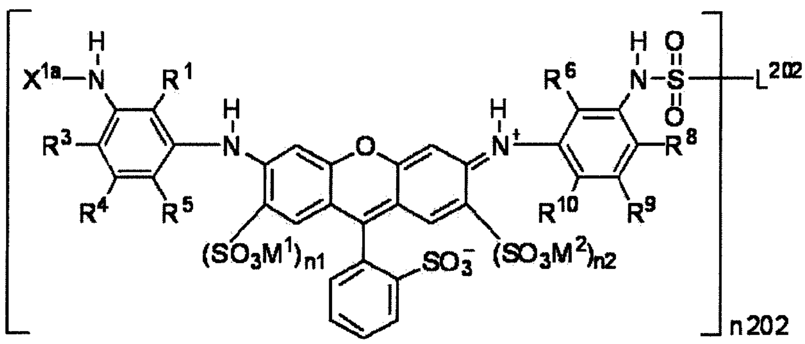

In Formula (4-2), $R^1$, $R^3$, $R^4$, $R^5$, $R^6$, $R^8$, $R^9$, and $R^{10}$ each independently represent a hydrogen atom or a substituent, $X^{1a}$ represents a substituted or unsubstituted alkyl group, a substituted or unsubstituted aryl group, a substituted or unsubstituted heterocyclic group, a substituted or unsubstituted carbonyl group, a substituted or unsubstituted sulfonyl group, a substituted or unsubstituted alkoxycarbonyl group, a substituted or unsubstituted aryloxycarbonyl group, a carbamoyl group, a substituted or unsubstituted monoalkylaminocarbonyl group, a substituted or unsubstituted dialkylaminocarbonyl group, a substituted or unsubstituted monoarylaminocarbonyl group, a substituted or unsubstituted diarylaminocarbonyl group, or a substituted or unsubstituted alkylarylaminocarbonyl group, $M^1$ and $M^2$ each independently represent a hydrogen atom or an alkali metal, n1 and n2 each independently represent 0 or 1, and n202 represents an integer of 2 to 6.

In Formula (4-2), $L^{202}$ represents an n202-valent linking group.

$R^1$, $R^3$, $R^4$, $R^5$, $R^6$, $R^8$, $R^9$, $R^{10}$, $X^{1a}$, $L^{202}$, $M^1$, $M^2$, n1, n2, and n202 in Formula (4-2) have the same definitions, the same specific examples, and the same preferable ranges as $R^1$, $R^3$, $R^4$, $R^5$, $R^6$, $R^8$, $R^9$, $R^{10}$, $X^{1a}$, $L^{201}$, $M^1$, $M^2$, n1, n2 and n201 in Formula (4-1).

Formula (4-3):

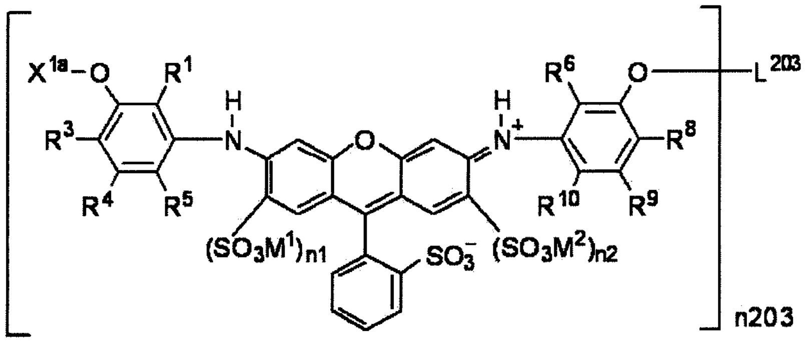

In Formula (4-3), $R^1$, $R^3$, $R^4$, $R^5$, $R^6$, $R^8$, $R^9$, and $R^{10}$ each independently represent a hydrogen atom or a substituent, $X^{1a}$ represents a substituted or unsubstituted alkyl group, a substituted or unsubstituted aryl group, a substituted or unsubstituted heterocyclic group, a substituted or unsubstituted carbonyl group, a substituted or unsubstituted sulfonyl group, a substituted or unsubstituted alkoxycarbonyl group, a substituted or unsubstituted aryloxycarbonyl group, a carbamoyl group, a substituted or unsubstituted monoalkylaminocarbonyl group, a substituted or unsubstituted dialkylaminocarbonyl group, a substituted or unsubstituted monoarylaminocarbonyl group, a substituted or unsubstituted diarylaminocarbonyl group, or a substituted or unsubstituted alkylarylaminocarbonyl group, $M^1$ and $M^2$ each independently represent a hydrogen atom or an alkali metal, n1 and n2 each independently represent 0 or 1, and n203 represents an integer of 2 to 6.

In Formula (4-3), $L^{203}$ represents an n203-valent linking group.

$R^1$, $R^3$, $R^4$, $R^5$, $R^6$, $R^8$, $R^9$, $R^{10}$, $X^{1a}$, $L^{203}$, $M^1$, $M^2$, n1, n2, and n203 in Formula (4-3) have the same definitions, the same specific examples, and the same preferable ranges as $R^1$, $R^3$, $R^4$, $R^5$, $R^6$, $R^8$, $R^9$, $R^{10}$, $X^{1a}$, $L^{201}$, $M^1$, $M^2$, n1, n2, and n201 in Formula (4-1).

Formula (4-4)

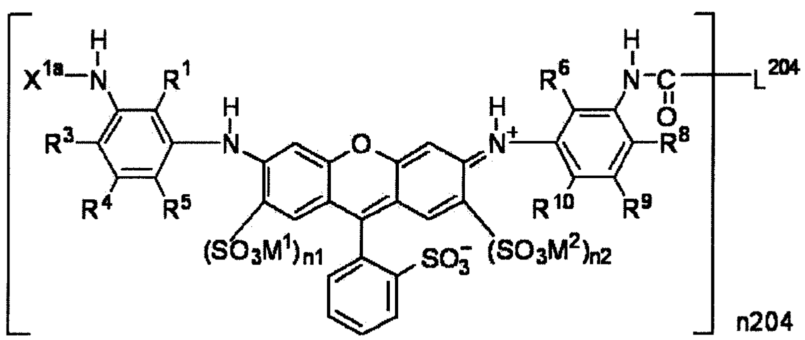

In Formula (4-4), $R^1$, $R^3$, $R^4$, $R^5$, $R^6$, $R^8$, $R^9$, and $R^{10}$ each independently represent a hydrogen atom or a substituent, and $X^{1a}$ represents a substituted or unsubstituted alkyl group, a substituted or unsubstituted aryl group, a substituted or unsubstituted heterocyclic group, a substituted or unsubstituted carbonyl group, a substituted or unsubstituted sulfonyl group, a substituted or unsubstituted alkoxycarbonyl group, a substituted or unsubstituted aryloxycarbonyl group, a carbamoyl group, a substituted or unsubstituted monoalkylaminocarbonyl group, a substituted or unsubstituted dialkylaminocarbonyl group, a substituted or unsubstituted monoarylaminocarbonyl group, a substituted or unsubstituted diarylaminocarbonyl group, or a substituted or unsubstituted alkylarylaminocarbonyl group, $M^1$ and $M^2$ each independently represent a hydrogen atom or an alkali metal, n1 and n2 each independently represent 0 or 1, n204 represents an integer of 2 to 6.

In Formula (4-4), $L^{204}$ represents an n204-valent linking group.

$R^1$, $R^3$, $R^4$, $R^5$, $R^6$, $R^8$, $R^9$, $R^{10}$, $X^{1a}$, $L^{204}$, $M^1$, $M^2$, n1, n2, and n204 in Formula (4-4) have the same definitions, the same specific examples, and the same preferable ranges as $R^1$, $R^3$, $R^4$, $R^5$, $R^6$, $R^8$, $R^9$, $R^{10}$, $X^{1a}$, $L^{201}$, $M^1$, $M^2$, n1, n2, and n201 in Formula (4-1).

Hereinafter, specific examples of the compound represented by Formula (1), the compound represented by Formula (2), the compound having the repeating unit represented by Formula (3), and the compound represented by Formula (4) will be shown, but the compounds are not limited to the specific examples. In the following structural formulae

of the specific compounds, Me represents a methyl group and i-Pr represents an isopropyl group. Moreover, all the terminal structures in the following compounds (3-1) to (3-4) are amino groups.

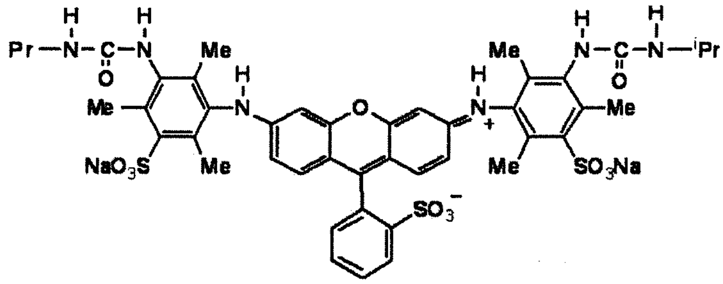

(1 -1)

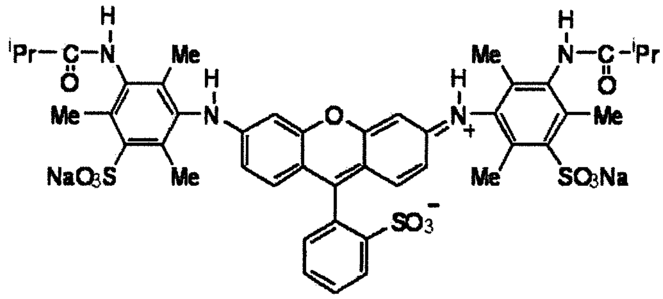

(1 - 2)

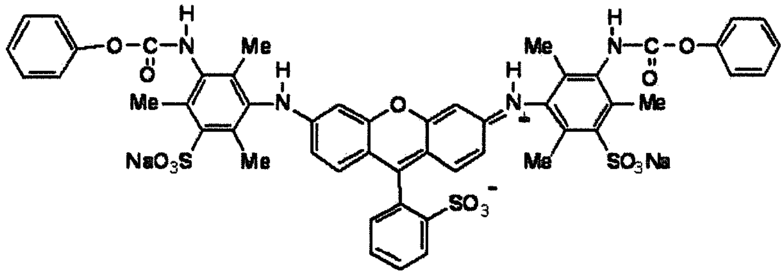

(1 - 3)

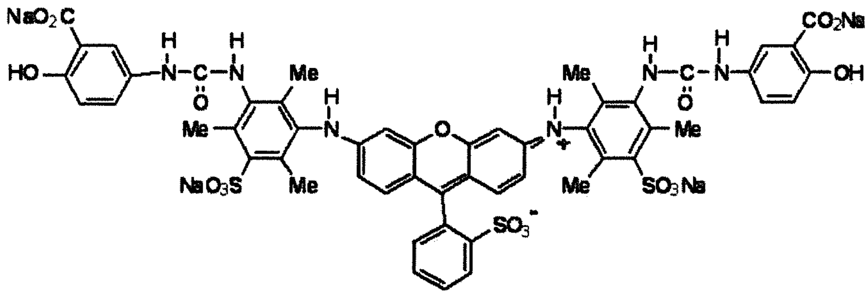

(1 - 4)

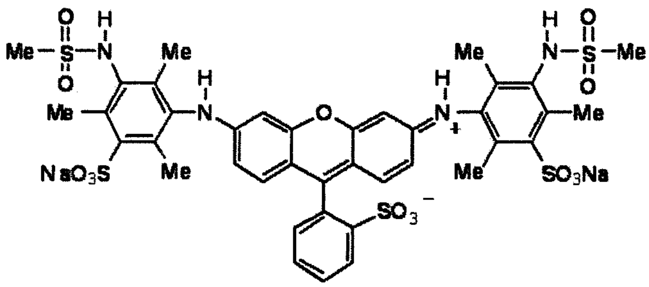

(1 - 5)

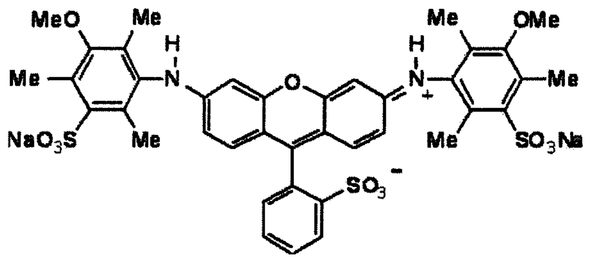

(1 - 6)

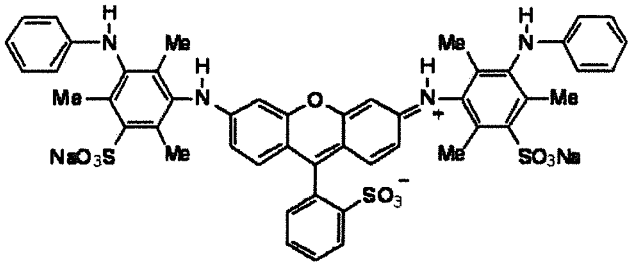

(1 - 7)

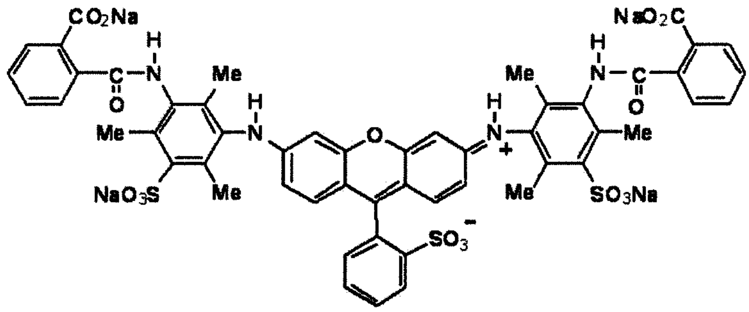

(1 - 8)

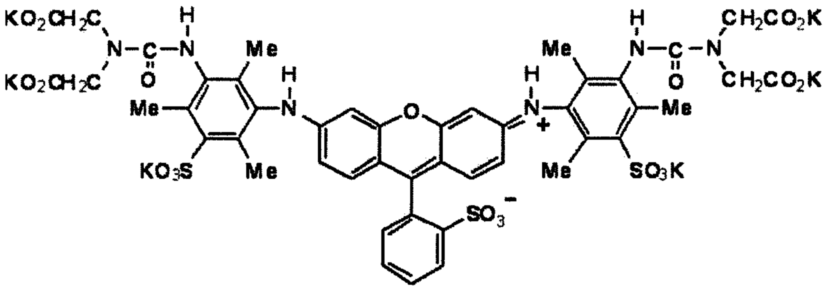

(1 - 9)

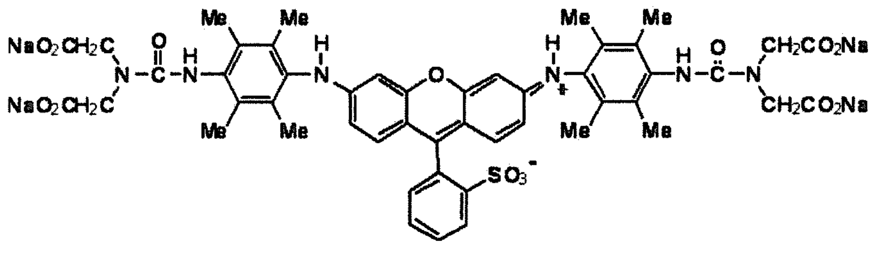

(2 - 1)

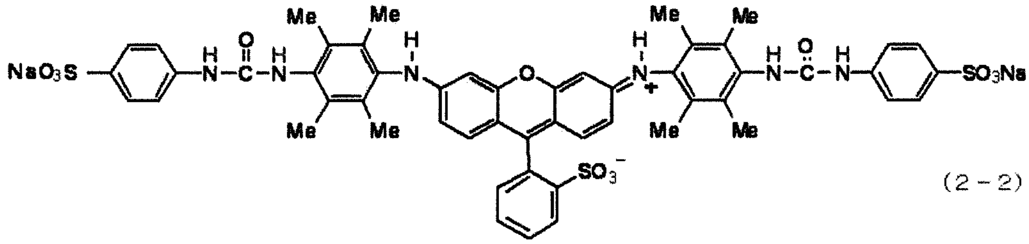

(2 - 2)

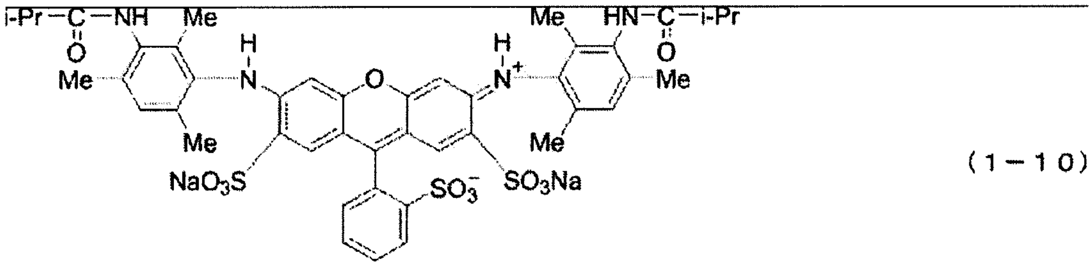

(1 - 1 0)

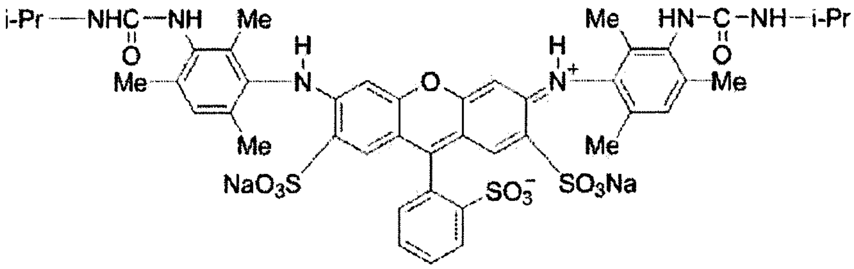

(1 - 1 1)

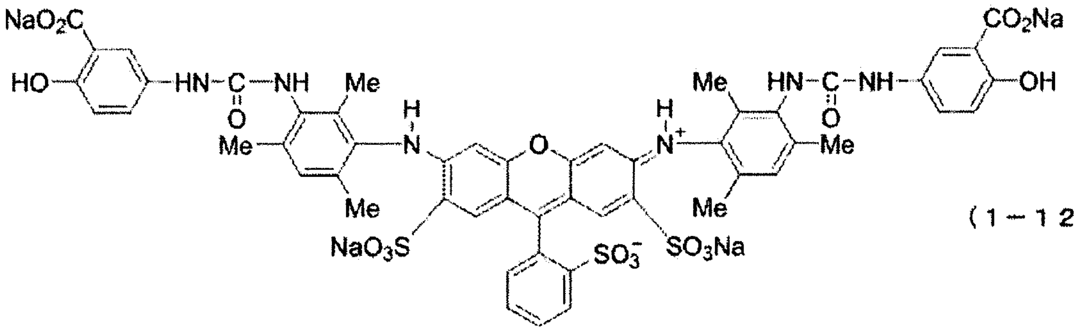

(1 - 1 2)

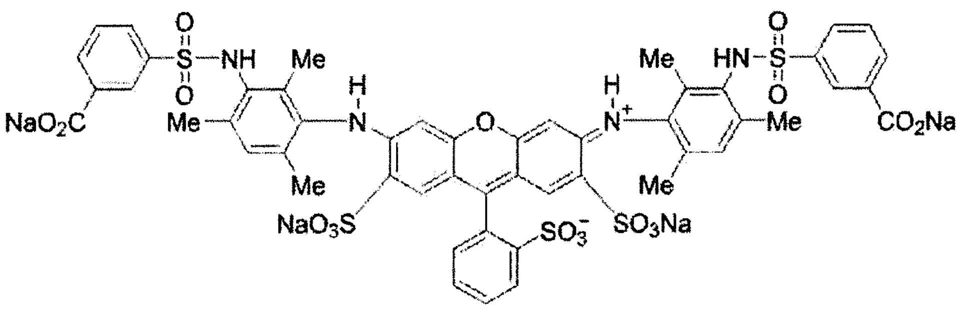

(1 - 1 3)

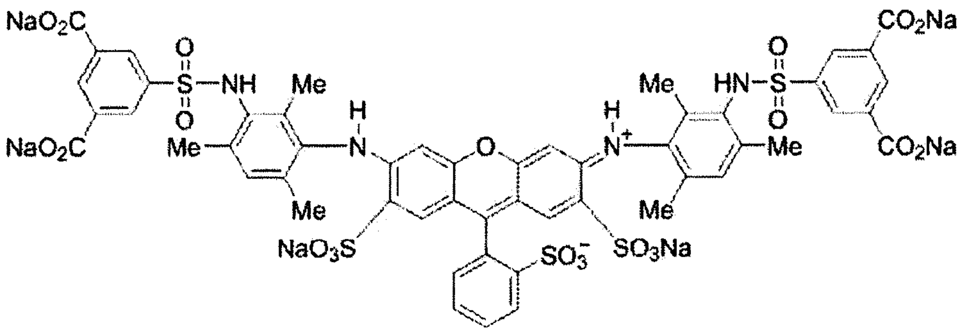

(1-14)

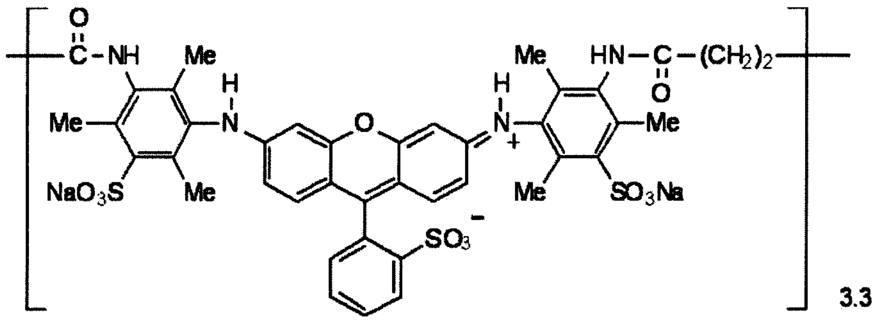

(3-1)

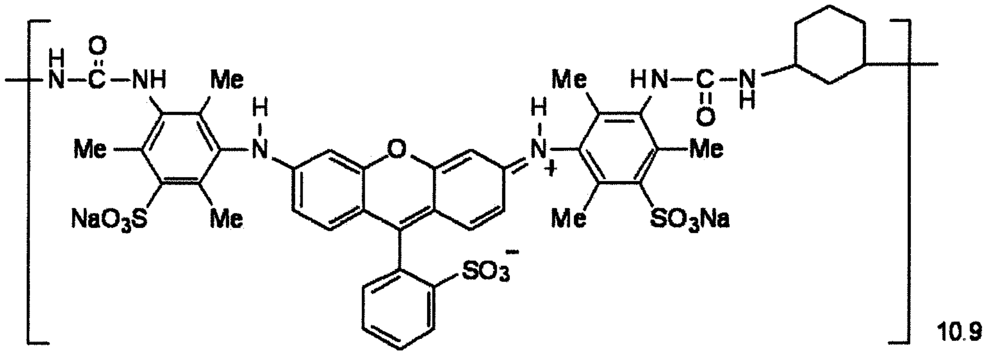

(3-2)

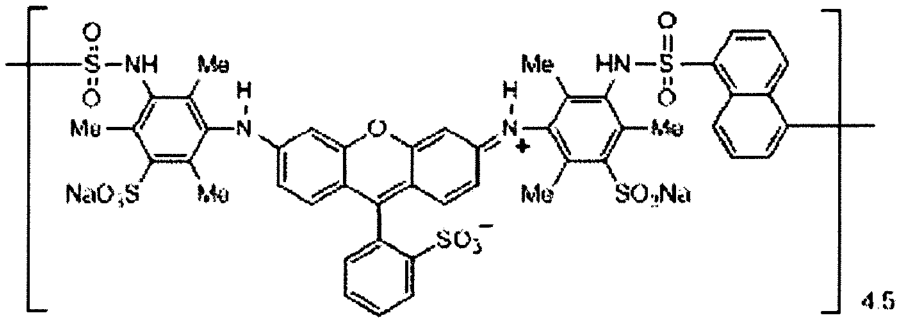

(3-3)

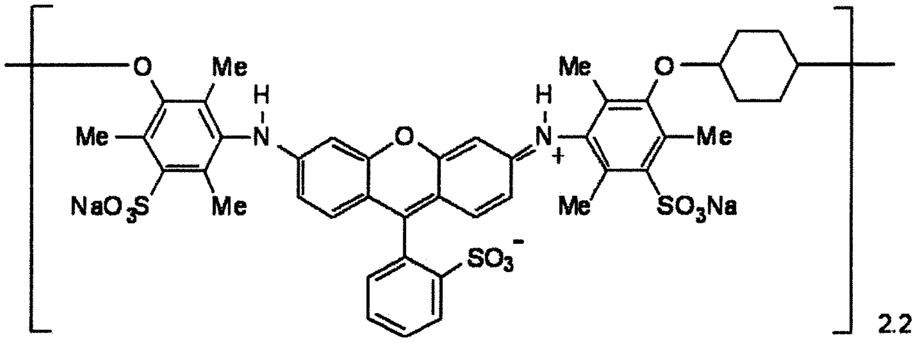

(3 - 4)

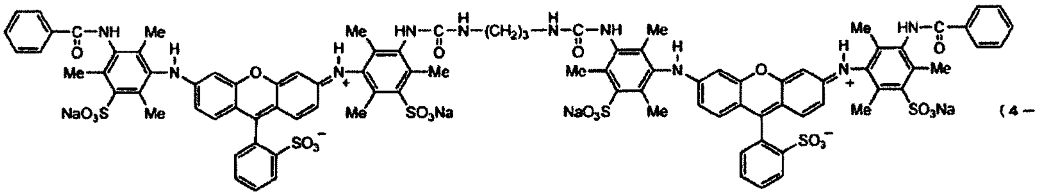

(4 - 1)

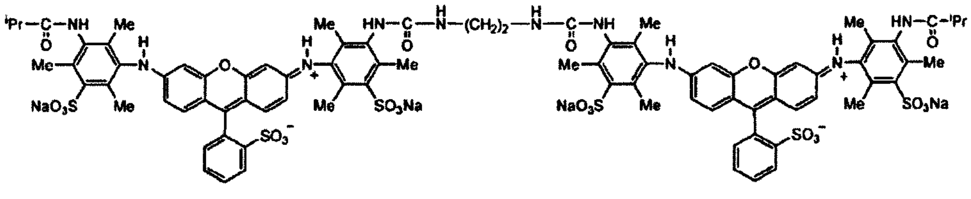

(4 - 2)

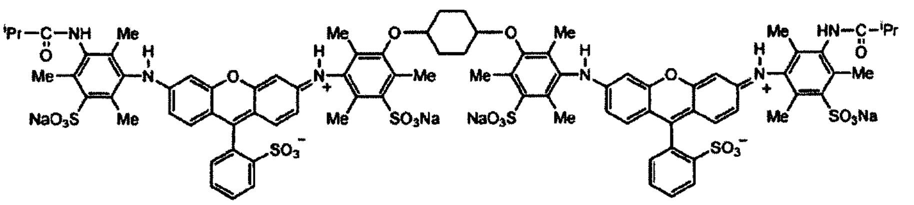

(4 - 3)

[Coloring Composition]

The coloring composition according to the present invention includes a xanthene compound which is soluble in water, and a compound represented by Formula (A). Details of the action mechanism in which light fastness is further improved by add the compound represented by Formula (A) to a dye are not clear, it is considered that the composition has a function of mitigating photodegradation of the dye by the compound represented by Formula (A). In addition, when an ink is prepared by dissolving the xanthene compound which is soluble in water used in the present invention in water, foaming by shaking and stirring is performed, and thus there is a problem in that if printing is performed immediately after the preparation, stripes are generated. Meanwhile, it is found that an unexpected effect in which workability of suppressing foaming is excellent can be obtained in a case where the compound represented by Formula (A) is added. Although the action mechanism thereof is not clear, it is thought that pH in the ink is controlled by adding the compound represented by Formula (A).

The coloring composition according to the present invention may include a medium and, in a case where a solvent is used as the medium, is suitable as an ink jet recording ink. The coloring composition according to the present invention can be prepared by using a lipophilic medium or an aqueous medium as the medium and dissolving and/or dispersing the compounds according to the present invention therein. It is preferable that an aqueous medium is used as the medium. Examples of the coloring composition according to the present invention includes an ink composition excluding a medium.

In the present invention, the content of the xanthene compound, which is soluble in water and is included in the coloring composition, is determined according to the kind of the xanthene compound to be used, the solvent component used to prepare the coloring composition, and the like. For example, the content of the xanthene compound in the coloring composition is preferably 1 to 20 mass%, more preferably 1 to 10 mass%, and still more preferably 2 to 6 mass%

with respect to the total mass of the coloring composition.

By adjusting the content of the xanthene compound, which is soluble in water, in the coloring composition to be 1 mass% or higher, the color developability of ink on a recording medium during printing can be improved, and a required image density can be secured. In addition, by adjusting the content of the xanthene compound, which is soluble in water, in the coloring composition to be 20 mass% or lower, in a case where the coloring composition is used in an ink jet recording method, the jettability of the coloring composition can be made to be excellent, and an effect of preventing the clogging or the like of an ink jet nozzle can be obtained.

The content of the compound represented by Formula (A) in the coloring composition according to the present invention is preferably 0.0001 to 5 mass% and more preferably 0.001 to 4 mass%. In the above-described range, a recording image having excellent light fastness can be realized without damaging hues included in coloring materials.

The coloring composition according to the present invention optionally includes other additives within a range where the effects of the present invention do not deteriorate. Examples of the other additives include additives which may be used in an ink jet recording ink described below.

[Ink Jet Recording Ink]

Next, the ink jet recording ink according to the present invention will be described.

The ink jet recording ink according to the present invention includes a xanthene compound which is soluble in water of the present invention, and a compound represented by Formula (A).

The ink jet recording ink according to the present invention can be prepared by dissolving and/or dispersing the compounds according to the present invention in a lipophilic medium or an aqueous medium. The ink jet recording ink is a link in which an aqueous medium is preferably used.

The ink jet recording ink according to the present invention optionally includes other additives within a range where the effects of the present invention do not deteriorate. Examples of the other additives include well-known additives such as an anti-drying agent (wetting agent), an antifading agent, an emulsion stabilizer, a penetration enhancer, a ultraviolet absorber, a preservative, a fungicide, a pH adjuster, a surface tension adjuster, an anti-foaming agent, a viscosity adjuster, a dispersant, a dispersion stabilizer, a rust inhibitor, or a chelating agent. In the case of a water-soluble ink, these various additives are directly added to the ink solution. In a case where an oil-soluble dye is used in the form of a dispersion, in general, the additives are added to a dye dispersion after the preparation of the dispersion. However, the additives may be added in the form of an oil phase or an aqueous phase during the preparation.

As the additives which can be used in the present invention, additives described in paragraphs "0091" to "0101" of JP2013-133394A can be used. Regarding the form, method, and the like of use, the contents described in JP2013-133394A can be preferably adopted.

The content of the xanthene compound which is soluble in water is preferably 0.2 mass% to 10 mass% and more preferably 1 mass% to 6 mass% with respect to 100 parts by mass of the ink jet recording ink according to the present invention. In addition, in the ink jet recording ink according to the present invention, other coloring agents may be used in combination with the xanthene compound which is soluble in water. In a case where two or more coloring agents are used in combination, it is preferable that the total content of the coloring agents is in the above-described range.

The viscosity of the ink jet recording ink according to the present invention is preferably 30 mPa·s or lower. In addition, the surface tension of the ink for ink jet textile printing according to the present invention is preferably 25 mN/m to 70 mN/m. The viscosity and the surface tension can be adjusted by adding various additives such as a viscosity adjuster, a surface tension adjuster, a specific resistance adjuster, a film conditioner, a ultraviolet absorber, an antioxidant, an antifading agent, a fungicide, a rust inhibitor, a dispersant, and a surfactant.

The ink jet recording ink according to the present invention can be used as any one of various tone inks but is preferably used as a magenta tone ink. In addition, the ink jet recording ink according to the present invention can be used not only for forming a monochromic image but also for forming a full-color image. In order to form a full-color image, a magenta tone ink, a cyan tone ink, and a yellow tone ink can be used. In addition, in order to adjust the tone, a black tone ink may be further used.

As coloring agents to be applied, arbitrary coloring agents can be used. For example, coloring agents described in paragraphs "0105" to "0108" of JP2013-133394A can be used.

The ink composition according to the present invention can be used in an recording method such as printing, duplicating, marking, writing, drawing, or stamping and is particularly suitable in an ink jet recording method.

[Ink Jet Recording Method]

The present invention relates to an ink jet recording method forming an image using the coloring composition or the ink jet recording ink according to the present invention.

In the ink jet recording method according to the present invention, energy is applied to the ink jet recording ink

to form an image on a well-known image receiving material, that is, plain paper or resin coated paper, for example, ink jet paper, films, electrophotographic common paper, fabric, glass, metal, or ceramic described in JP1996-169172A (JP-H08-169172A), JP1996-27693A (JP-H08-27693A), JP1990-276670A (JP-H02-276670A), JP1995-276789A (JP-H07-276789A), JP1997-323475A (JP-H09-323475A), JP1987-238783A (JP-S62-238783A), JP1998-153989A (JP-H10-153989A), JP1998-217473A (JP-H10-217473A), JP1998-235995A (JP-H10-235995A), JP1998-337947A (JP-H10-337947A), and JP1998-217597A (JP-H10-217597A).

During the formation of an image, in order to impart glossiness or water fastness or to improve weather fastness, a polymer particle dispersion (also referred to as a polymer latex) may also be used. Regarding the timing when the polymer latex is added to the image receiving material, the addition may be performed before, during, or after the addition of the colorants. Therefore, a position where the addition is performed may be the image receiving paper or the ink. Alternatively, a liquid material consisting only of the polymer latex may be used. Specifically, a method described in, for example, JP2000-363090, JP2000-315231, JP2000-354380, JP2000-343944, JP2000-268952, JP2000-299465, and JP2000-297365, can be preferably used.

[Ink Jet Printer Cartridge and Ink Jet Recorded Material]

An ink cartridge for ink jet recording according to the present invention is filled with the above-described ink jet recording ink according to the present invention. In addition, an ink jet recorded material according to the present invention is obtained by forming a colored image on a recording material using the ink jet recording ink according to the present invention.

Regarding recording paper and recording films used to perform ink jet printing using the ink according to the present invention, for example, the contents described in paragraphs "0112" to "0121" of JP2013-133394A can be adopted.

The ink according to the present invention can be used in well-known ink jet recording methods without any particular limitation, for example, a electric charge control method of jetting ink using an electrostatic attraction force, a drop-on-demand method (pressure pulse method) using a vibration pressure of a piezoelectric element, an acoustic ink jet method of converting an electrical signal into an acoustic beam, irradiating the ink with the acoustic beam, and jetting ink using a radiation pressure, or a thermal ink jet method of heating ink to form bubbles and using a pressure generated from the bubbles. Examples of the ink jet recording method include a method of jetting a plurality of droplets of a low-density ink called photo ink with a small volume, a method of improving image quality using a plurality of inks having substantially the same hue and different densities, and a method of using a colorless and transparent ink.

[Examples]

Hereinafter, the present invention will be described using examples, but the present invention is not limited to these examples. Unless specified otherwise, "%" and "part(s)" represent "mass%" and "part(s) by mass".

(Synthesis Example 1) Synthesis of Exemplary Compound (1-2)

Exemplary Compound (1-2) can be synthesized using a method according to Synthesis Example 2 of JP2011-148973A.

(Synthesis Example 2) Synthesis of Exemplary Compound (1-3)

Exemplary Compound (1-3) can be synthesized, for example, using the following scheme.

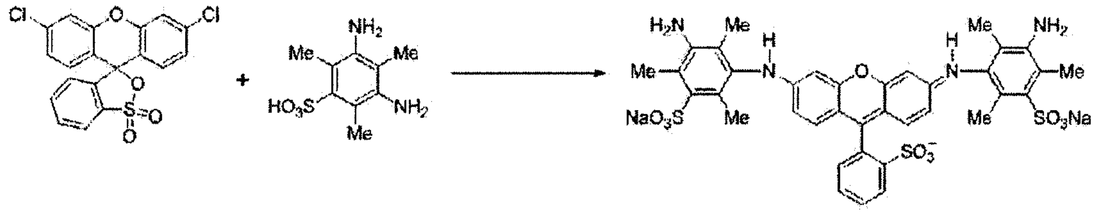

Intermediate Product (B)

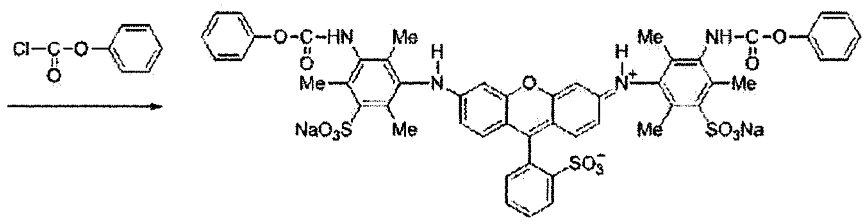

(Synthesis of Intermediate Product (B))

20 g of 3',6'-dichlorospiro[3H-2,1-benzoxathiole-3,9'-[9H]xanthene]-1,1-dioxide (manufactured by Chugai kasei Co., Ltd., DCSF (trade name)), 46 g of 2,4-diaminomesitylene-6-sulfonic acid, 30 g of diazabicycloundecene (DBU), and 6.7 g of zinc chloride were added to 250 g of ethylene glycol to cause a reaction to occur at 150°C for 6 hours. The obtained reaction solution was cooled to room temperature and was poured into 1 L of acetonitrile. The obtained crystals were purified by column chromatography (filler: SEPHADEX LH-20 (manufactured by Pharmacia), developing solvent: water/methanol) to obtain Intermediate Product (B).
Yield amount: 7.7 g
Yield ratio: 19%
MS (m/z)=836 ($[M-1]^-$, 100%)

(Synthesis of Exemplary Compound (1-3))

20 g of Intermediate Product (B) was dissolved in 120 mL of N,N-dimethylacetamide (DMAc), and the solution was cooled such that the internal temperature thereof reached 0°C. 10 mL of phenyl chloroformate (manufactured by Tokyo Chemical Industry Co., Ltd.) was added dropwise while maintaining the internal temperature thereof at 5°C or lower, and then a reaction was caused to occur at 0°C to 5°C for 90 minutes. The obtained reaction solution was poured into 1500 mL of ethyl acetate, and precipitated crystals were separated by filtering. The obtained crystals were dissolved in 200 mL of water, and the pH thereof was adjusted to 7 using a diluted sodium hydroxide aqueous solution. The obtained aqueous solution was purified by column chromatography (filler: SEPHADEX LH-20 (manufactured by Pharmacia), developing solvent: water/methanol). The aqueous solution was condensed using a rotary evaporator, was dissolved in water again, and was caused to pass through a strong acid ion exchange resin (AMBERLITE IR124-H (trade name), manufactured by Organo Corporation), and then the pH of the aqueous solution was adjusted to 7 using a diluted sodium hydroxide aqueous solution, and dust was removed by filtering using a membrane filter. Next, the aqueous solution was condensed and dried using a rotary evaporator. As a result, a green glossy solid of Exemplary Compound (1-3) was obtained.
Yield amount: 24 g
Yield ratio: 93%
MS (m/z)=1054 ($[M-Na]^-$, 100%)

In an absorption spectrum of Exemplary Compound (1-3) in the dilute aqueous solution, the absorption maximum wavelength was 531 nm.

(Synthesis Example 3) Synthesis of Exemplary Compound (1-1)

Exemplary Compound (1-1) can be synthesized, for example, using the following scheme.

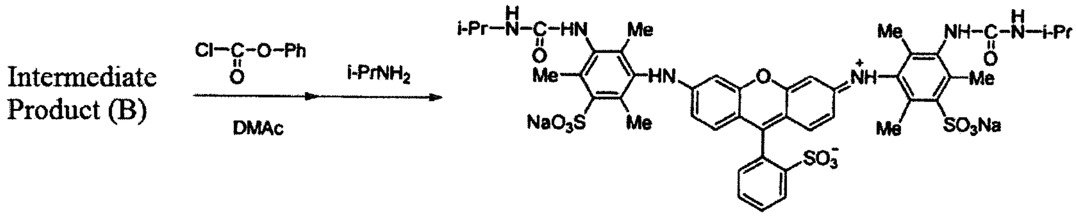


4 g of Intermediate Product (B) obtained as the synthetic intermediate product of Exemplary Compound (1-3) described above was dissolved in 56 mL of N,N-dimethylacetamide (DMAc), and the solution was cooled such that the internal temperature thereof reached 0°C. 4.8 mL of phenyl chloroformate (manufactured by Tokyo Chemical Industry Co., Ltd.) was added dropwise while maintaining the internal temperature thereof at 5°C or lower, and then a reaction was caused to occur at room temperature for 90 minutes. The solution was cooled again such that the internal temperature reached 0°C, 4.0 mL of isopropylamine (manufactured by Wako Pure Chemical Industries, Ltd.) was added dropwise thereto at an internal temperature of 10°C or lower, and the components were stirred at room temperature for 30 minutes. The obtained reaction solution was poured into a large excess of ethyl acetate, and precipitated solid was separated by filtering. The obtained solid was dissolved in water, and the pH thereof was adjusted to 7 using a diluted sodium hydroxide aqueous solution. The obtained aqueous solution was purified by column chromatography (filler: SEPHADEX LH-20 (manufactured by Pharmacia), developing solvent: water/methanol). The obtained aqueous solution was condensed using a rotary evaporator, was dissolved in water again, and was caused to pass through a strong acid ion exchange resin (AMBERLITE IR120-H (trade name), manufactured by Organo Corporation), and then the pH of the aqueous solution was adjusted to 7 using a diluted sodium hydroxide aqueous solution, and dust was removed by filtering using a membrane filter. Next, the aqueous solution was condensed and dried using a rotary evaporator. As a result, a green glossy solid of Exemplary Compound (1-1) was obtained.
Yield amount: 3.1 g
Yield ratio: 67%
MS (m/z)=962 ($[M-1]^-$, 100%)

In an absorption spectrum of Exemplary Compound (1-1) in the dilute aqueous solution, the absorption maximum wavelength was 531 nm, and the molar absorption coefficient was 65000.

(Synthesis Example 4) Synthesis of Exemplary Compound (3-2)

3.0 g of Exemplary Compound (1-3) described above was dissolved in 30 mL of N,N-dimethylacetamide (DMAc), and the solution was cooled such that the internal temperature thereof reached 0°C. A solution in which 0.32 g of 1,3-cyclohexanediamine was dissolved in 10 mL of N,N-dimethylacetamide (DMAc) was added dropwise over 30 minutes, and a reaction was caused to occur at room temperature for 24 hours. The reaction solution was poured into 300 mL of isopropyl alcohol, and precipitated crystals were separated by filtration and were dissolved again in 100 mL of water. The solution was caused to pass through a strong acid ion exchange resin (AMBERLITE IR-124H (trade name), manufactured by Organo Corporation), and the pH thereof was adjusted to 7.0 using a diluted sodium hydroxide aqueous solution. Next, inorganic salts were removed from the aqueous solution using a dialysis membrane (molecular weight cutoff: 3500, Spectra/Por 3 dialysis Membrane (trade name, manufactured by SPECTRUM LABORATORIES, INC.)). The solution was condensed and dried to obtain 2.5 g of metal glossy crystals of Exemplary Compound (3-2). It was estimated by GPC measurement that the molecular weight of a repeating unit in terms of polystyrene was 10.9. In an UV-Vis spectrum of Exemplary Compound (3-2) in the dilute aqueous solution, the absorption maximum wavelength was 532 nm.

(Synthesis Example 5) Synthesis of Exemplary Compound (4-2)

Exemplary Compound (4-2) can be synthesized, for example, using the following scheme.

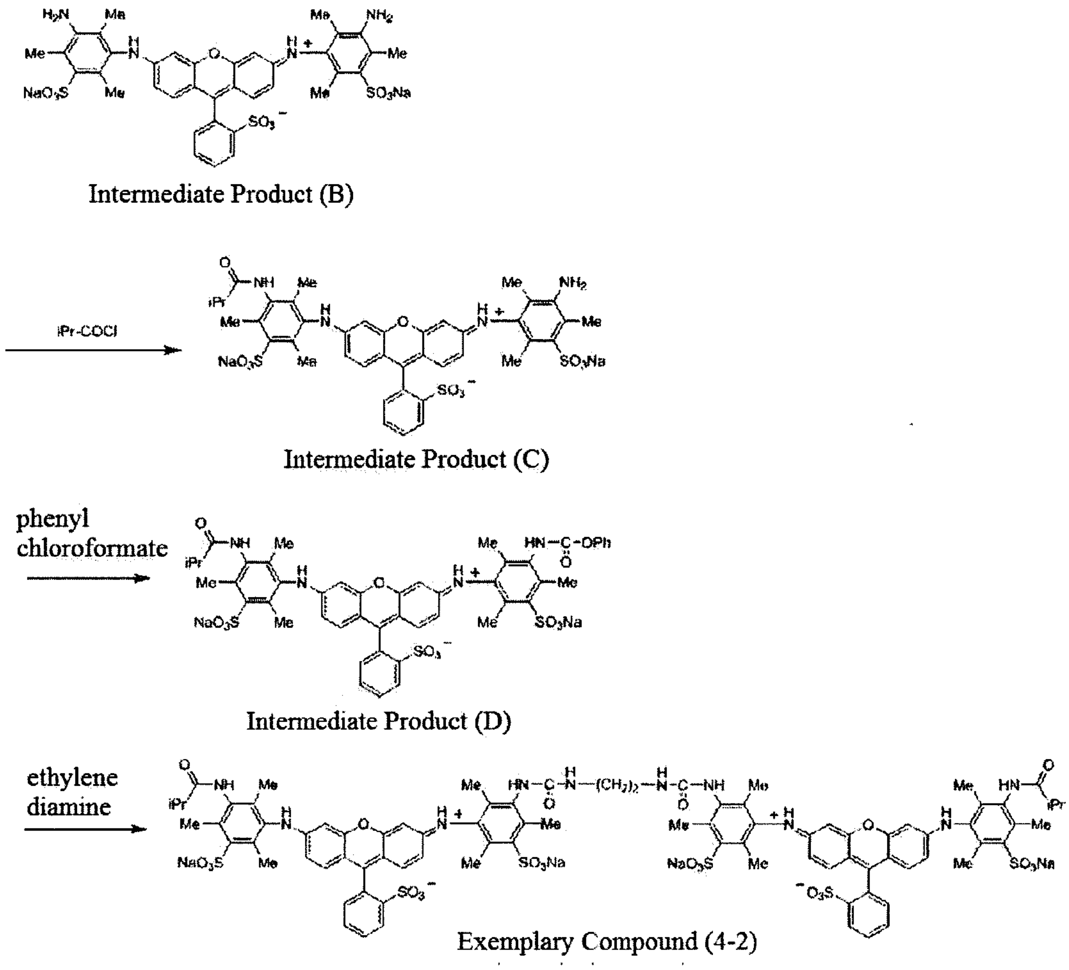


Intermediate Product (B)

Intermediate Product (C)

Intermediate Product (D)

Exemplary Compound (4-2)

[Synthesis of Intermediate Product (C)]

20 g of Intermediate Product (B) was dissolved in 120 mL of N,N-dimethylacetamide (DMAc), and the solution was cooled such that the internal temperature thereof reached 0°C. 10 mL of isobutyryl chloride (manufactured by Tokyo Chemical Industry Co., Ltd.) was added dropwise thereto while maintaining the internal temperature thereof at 5°C or lower, and then a reaction was caused to occur at 0°C to 5°C for 90 minutes. The obtained reaction solution was poured into 1500 mL of ethyl acetate, and precipitated crystals were separated by filtering. The obtained crystals were dissolved in 200 mL of water, and the pH thereof was adjusted to 7 using a diluted sodium hydroxide aqueous solution. The obtained aqueous solution was purified by column chromatography (filler: SEPHADEX LH-20 (manufactured by Pharmacia), developing solvent: water/methanol). The aqueous solution was condensed using a rotary evaporator, was dissolved in water again, and then was caused to pass through a strong acid ion exchange resin (AMBERLITE IR124-H (trade name), manufactured by Organo Corporation). Next, the pH of the aqueous solution was adjusted to 7 using a diluted sodium hydroxide aqueous solution, and dust was removed by filtering using a membrane filter. Next, the aqueous solution was condensed and dried using a rotary evaporator. As a result, a green glossy solid of Intermediate Product (C) was obtained.
Yield amount: 22 g
MS (m/z)=884.2 ([M-Na]$^-$, 100%)

[Synthesis of Intermediate Product (D)]

22 g of Intermediate Product (C) was dissolved in 120 mL of N,N-dimethylacetamide (DMAc), and the solution was cooled such that the internal temperature thereof reached 0°C. 5 mL of phenyl chloroformate (manufactured by Tokyo Chemical Industry Co., Ltd.) was added dropwise while maintaining the internal temperature thereof at 5°C or lower, and then a reaction was caused to occur at 0°C to 5°C for 90 minutes. The obtained reaction solution was poured into 1500 mL of ethyl acetate, and precipitated crystals were separated by filtering. The obtained crystals were dissolved in 200 mL of water, and the pH thereof was adjusted to 7 using a diluted sodium hydroxide aqueous solution. The

obtained aqueous solution was purified by column chromatography (filler: SEPHADEX LH-20 (manufactured by Pharmacia), developing solvent: water/methanol). The aqueous solution was condensed using a rotary evaporator, was dissolved in water again, and then was caused to pass through a strong acid ion exchange resin (AMBERLITE IR124-H (trade name), manufactured by Organo Corporation). Next, the pH of the aqueous solution was adjusted to 7 using a diluted sodium hydroxide aqueous solution, and dust was removed by filtering using a membrane filter. Next, the aqueous solution was condensed and dried using a rotary evaporator. As a result, a green glossy solid of Intermediate Product (D) was obtained.
Yield amount: 20 g
MS (m/z)=1004 ($[M-Na]^-$, 100%)

[Synthesis of Exemplary Compound (4-2)]

3.0 g of Intermediate Product (D) was dissolved in 30 mL of N,N-dimethylacetamide (DMAc), and the solution was cooled such that the internal temperature thereof reached 0°C. A solution in which 0.2 g of ethylenediamine was dissolved in 10 mL of N,N-dimethylacetamide (DMAc) was added dropwise over 30 minutes, and a reaction was caused to occur at room temperature for 24 hours. The reaction solution was poured into 300 mL of isopropyl alcohol, and precipitated crystals were separated by filtration and were dissolved again in 100 mL of water. The solution was caused to pass through a strong acid ion exchange resin (AMBERLITE IR-124H (trade name), manufactured by Organo Corporation), and the pH thereof was adjusted to 7.0 using a diluted sodium hydroxide aqueous solution. Next, inorganic salts were removed from the aqueous solution using a dialysis membrane (molecular weight cutoff: 3500, Spectra/Por 3 dialysis Membrane (trade name, manufactured by SPECTRUM LABORATORIES, INC.)). The solution was condensed and dried to obtain 2.5 g of metal glossy crystals of Exemplary Compound (4-2). In an UV-Vis spectrum of Exemplary Compound (4-2) in the dilute aqueous solution, the absorption maximum wavelength was 532 nm.

Other Exemplary Compounds can be synthesized using the above-described method.

[Example 1]

<Preparation of Ink Composition>

An ink composition having the following composition was stirred for 1 hour while heated at 30 to 40°C. Next, the pH of the ink composition was adjusted to 9 using 10 mol/L of a sodium hydroxide aqueous solution, and the obtained solution was filtered under reduced pressure through a microfilter having an average pore size of 0.25 μm. As a result, an ink solution 1 for magenta was prepared.
Numerical values in the following Table 1 and Table 2 represent mass ratios of respective components.

Composition of ink solution 1

Xanthene compound (dye): Acid Red 52 3.5 mass%
Compound represented by Formula (A): sodium 5-aminosalicylate 0.5 mass% Triethylene glycol monobutyl ether 10 mass%
Glycerin 10 mass%
Triethylene glycol 5 mass%
OLFINE E1010 (acetylenic glycol surfactant, manufactured by Nissin Chemical Co., Ltd.) 2 mass%
Water Balance

[Examples 2 to 18 and Comparative Examples 1 to 5]

Each of ink solutions 2 to 18 and ink solutions for comparison 1 to 5 was prepared using the same method as in preparation of ink solution 1, except that the xanthene compound (dye) and the compound represented by Formula (A) were changed as shown in the following Table 1, Table 2, and Table 3.
The prepared ink solutions 1 to 18 and ink solutions for comparison 1 to 5 were used as an ink jet recording ink.
All the dyes used in Examples 1 to 18 and Comparative Examples 1 to 5 were soluble in water.

(Image Recording and Evaluation)

The ink jet recording inks according to Examples and Comparative Examples were evaluated as follows. The results are shown in Table 1, Table 2, and Table 3.

In Table 1, Table 2, and Table 3, hues and light fastness were evaluated after an image was formed on photo glossy paper (PM photographic paper <GLOSS> (KA420PSK, manufactured by Seiko Epson Corporation)) using each of the ink jet recording inks and an ink jet printer (PM-700C, manufactured by Seiko Epson Corporation).

<Light Fastness>

A solid magenta image was printed after adjusting an applied duty was adjusted such that the optical density (OD) was in a range of 0.9 to 1.1. Using a xenon light fastness tester XL-75s (trade name; manufactured by Suga Test Instrument Co., Ltd.), the obtained printed material was exposed for 30 days under conditions of relative humidity at 23°C: 50% and illuminance: 75000 lux.

The OD value of the printed material after the exposure was measured using a reflection densitometer "Spectrolino" (trade name, manufactured by Gretag Macbeth GmbH), and a residual optical density (ROD) was obtained from the following expression and was evaluated based on the following criteria.

$$ROD\ (\%) = (D/D0) \times 100$$

D: OD after the exposure test
D0: OD before the exposure test
(measurement conditions of light source: D50, view angle: 2° , and DIN-NB)
S: ROD was 95% or higher
A: ROD was 90% or higher and lower than 95%
B: ROD was 80% or higher and lower than 90%
C: ROD was 70% or higher and lower than 80%
D: ROD was 60% or higher and lower than 70%
E: ROD was lower than 60%

<Hues>

Hues were visually evaluated in three stages: excellent; favorable; and poor. A indicates that hues were excellent, B indicates that hues were favorable, and C indicates that hues were poor.

<Defoaming Properties>

(Evaluation of workability at preparation of ink)

The prepared ink was shaken for 15 seconds and was left to stand, the time until bubbles were removed was measured, and workability was evaluated. The workability was evaluated in three stages: a case where bubbles were almost removed within shorter than 3 minutes is indicated by A, a case where bubbles were almost removed within 3 minutes or longer and shorter than 10 minutes is indicated by B, and a case where bubbles were not removed even after 10 minutes or longer is indicated by C.

[Table 1]

| | | Dye | Mass (%) | Compound represented by Formula (A) | Mass (%) | Light Fastness | Hue | Defoaming properties |
|---|---|---|---|---|---|---|---|---|
| Example 1 | Ink solution 1 | Acid Red 52 | 3.5 | Sodium 5-aminosalicylate | 0.5 | C | A | B |
| Example 2 | Ink solution 2 | Acid Red 289 | 3.5 | Sodium 5-aminosalicylate | 0.5 | A | A | B |
| Example 3 | Ink solution 3 | Acid Red 289 | 3.5 | Lithium 5-aminosalicylate | 0.5 | A | A | B |
| Example 4 | Ink solution 4 | Acid Red 289 | 3.5 | Lithium 4-aminosalicylate | 0.5 | A | A | B |
| Example 5 | Ink solution 5 | Acid Red 289 | 3.5 | Sodium 5-hydroxyanthranilate | 0.5 | B | A | B |
| Example 6 | Ink solution 6 | Exemplary Compound (1-1) | 3.5 | Sodium 5-aminosalicylate | 0.5 | S | A | A |
| Example 7 | Ink solution 7 | Exemplary Compound (1-2) | 3.5 | Sodium 5-aminosalicylate | 0.5 | S | A | A |
| Example 8 | Ink solution 8 | Exemplary Compound (1-3) | 3.5 | Sodium 4-aminosalicylate | 0.5 | S | A | A |
| Example 9 | Ink solution 9 | Exemplary Compound (1-4) | 3.5 | Sodium 5-aminosalicylate | 0.5 | S | A | A |
| Example 10 | Ink solution 10 | Exemplary Compound (1-8) | 3.5 | Sodium 5-aminosalicylate | 0.5 | S | A | A |
| Example 11 | Ink solution 11 | Exemplary Compound (1-9) | 3.5 | Sodium 4-aminosalicylate | 0.5 | S | A | A |
| Example 12 | Ink solution 12 | Exemplary Compound (2-1) | 3.5 | Sodium 5-aminosalicylate | 0.5 | S | A | A |
| Example 13 | Ink solution 13 | Exemplary Compound (3-2) | 3.5 | Sodium 5-aminosalicylate | 0.5 | S | A | A |

[Table 2]

| | | Dye | Mass (%) | Compound represented by Formula (A) | Mass (%) | Light Fastness | Hue | Defoaming properties |
|---|---|---|---|---|---|---|---|---|
| Example 14 | Ink solution 14 | Exemplary Compound (4-2) | 3.5 | Sodium 4-aminosalicylate | 0.5 | S | A | A |
| Example 15 | Ink solution 15 | Xanthene dye 1 | 0.5 | Sodium 4-aminosalicylate | 0.5 | B | A | A |
| Comparative Example 1 | Ink solution for comparison 1 | Acid Red 52 | 3.5 | - | - | D | A | C |
| Comparative Example 2 | Ink solution for comparison 2 | Acid Red 289 | 3.5 | - | - | C | A | C |
| Comparative Example 3 | Ink solution for comparison 3 | Azo dye 1 | 3.5 | Sodium 5-aminosalicylate | 0.5 | B | B | B |
| Comparative Example 4 | Ink solution for comparison 4 | Azo dye 1 | 3.5 | - | - | B | B | A |
| Comparative Example 5 | Ink solution for comparison 5 | Xanthene dye 1 | 0.5 | - | - | C | A | A |

[Table 3]

| | | Dye | Mass (%) | Compound represented by Formula (A) | Mass (%) | Light Fastness | Hue | Defoaming properties |
|---|---|---|---|---|---|---|---|---|
| Example 16 | Ink solution 16 | Exemplary Compound (1-10) | 3.5 | Sodium 5-aminosalicylate | 0.5 | A | A | A |
| Example 17 | Ink solution 17 | Exemplary Compound (1-11) | 3.5 | Sodium 5-aminosalicylate | 0.5 | A | A | A |
| Example 18 | Ink solution 18 | Exemplary Compound (1-14) | 3.5 | Sodium 5-aminosalicylate | 0.5 | A | A | A |

In addition to Exemplary Compounds described above, compounds used in Examples and Comparative Examples will be shown below.

Acid Red 289

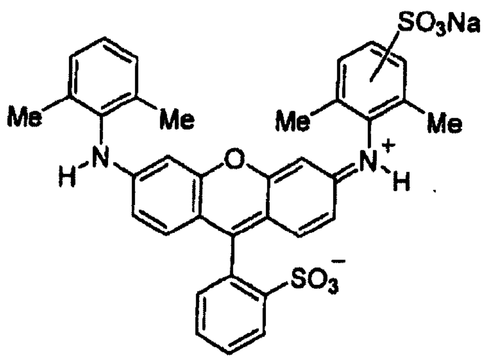

Acid Red 52

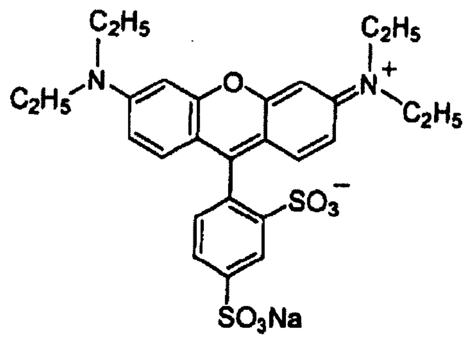

Azo dye 1

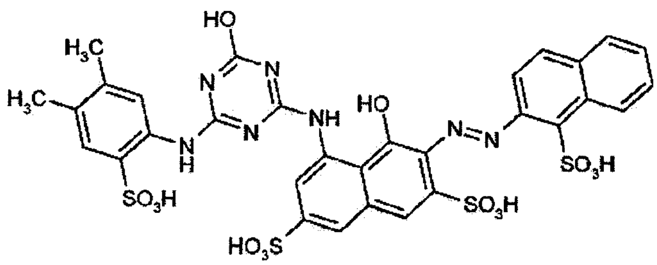

Xanthene dye 1

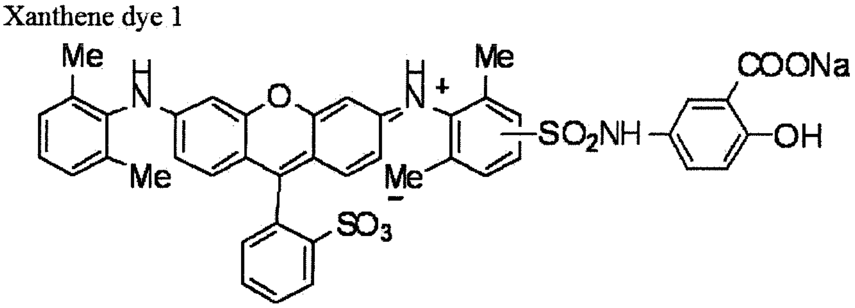

As seen from the results of Table 1, Table 2, and Table 3, it is found that in the inks in Examples according to the present invention, by combining the xanthene dye which is soluble in water and the compound represented by Formula (A), light fastness was improved without deteriorating hues. In addition, excellent defoaming properties were exhibited.

[Industrial applicability]

The coloring composition according to the present invention has excellent hues, is capable of forming an image having excellent light fastness, and has excellent defoaming properties.

The present invention has been described in detail with reference to the specific embodiment. However, it is obvious to those skilled in the art that various modifications and changes can be made within a range not departing from the scope of the present invention.

The present application is based on Japanese Patent Application (JP2014-202470) filed on September 30, 2014, the entire content of which is incorporated herein by reference.

## Claims

1. A coloring composition comprising:

a xanthene compound which is soluble in water; and
a compound represented by the following Formula (A),

Formula (A)

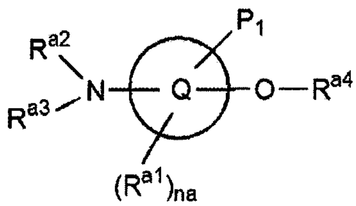

in Formula (A), Q represents a benzene ring or a naphthalene ring, $P_1$ represents $-CO_2M$ or $-SO_3M$, $R^{a1}$ represents a substituent, $R^{a2}$, $R^{a3}$, and $R^{a4}$ each independently represent a hydrogen atom or a substituent, na represents an integer of 0 to 3, when na is 2 or more, a plurality of $R^{a1}$'s may be the same as or different from each other, and M represents a counter cation.

2. The coloring composition according to claim 1,

wherein the compound represented by Formula (A) is a compound represented by the following Formula (A-1-1),

Formula (A-1-1)

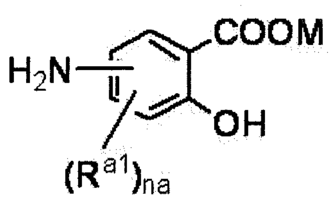

in Formula (A-1-1), $R^{a1}$ represents a substituent, na represents an integer of 0 to 3, when na is 2 or more, a plurality of $R^{a1}$'s may be the same as or different from each other, and M represents a counter cation.

3. The coloring composition according to claim 1 or 2,

wherein M is a lithium ion, a sodium ion, a potassium ion, or an ammonium ion.

**4.** The coloring composition according to any one of claims 1 to 3,

wherein the xanthene compound which is soluble in water is at least one of a compound represented by the following Formula (1), a compound represented by the following Formula (2), a compound having a repeating unit represented by the following Formula (3), or a compound represented by the following Formula (4),

Formula (1)

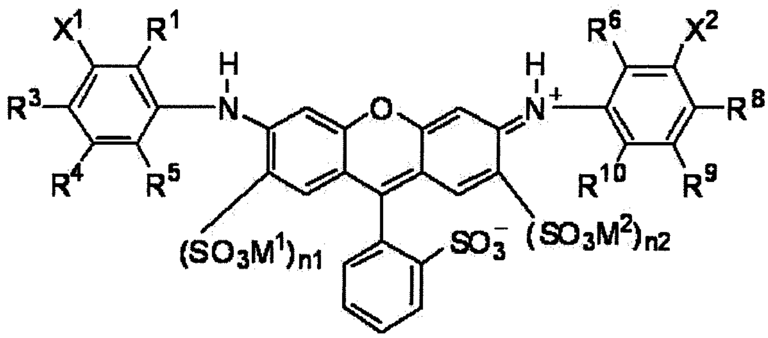

Formula (2)

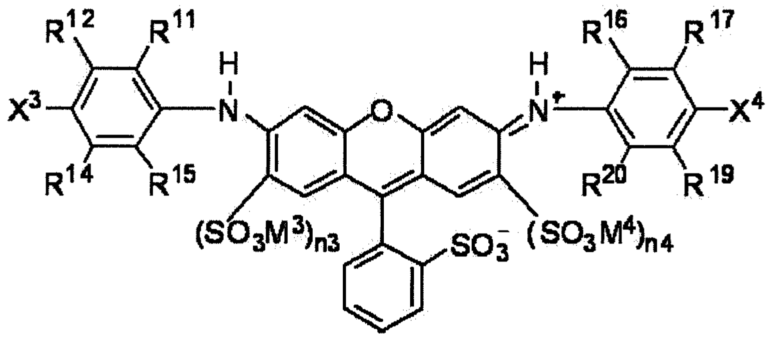

in Formula (1) and Formula (2), $R^1$, $R^3$, $R^4$, $R^5$, $R^6$, $R^8$, $R^9$, $R^{10}$, $R^{11}$, $R^{12}$, $R^{14}$, $R^{15}$, $R^{16}$, $R^{17}$, $R^{19}$, and $R^{20}$ each independently represent a hydrogen atom or a substituent, $X^1$, $X^2$, $X^3$, and $X^4$ each independently represent a hydroxyl group, a substituted or unsubstituted alkoxy group, a substituted or unsubstituted aryloxy group, a substituted or unsubstituted heterocyclic oxy group, a substituted or unsubstituted alkylamino group, a substituted or unsubstituted arylamino group, a substituted or unsubstituted heterylamino group, a substituted or unsubstituted carbonylamino group, a substituted or unsubstituted acyloxy group, a substituted or unsubstituted aminocarbonyloxy group, a substituted or unsubstituted sulfonylamino group, a substituted or unsubstituted alkoxycarbonylamino group, a substituted or unsubstituted aryloxycarbonylamino group, a substituted or unsubstituted ureido group, a substituted or unsubstituted alkylthio group, or a substituted or unsubstituted arylthio group, $M^1$, $M^2$, $M^3$, and $M^4$ each independently represent a hydrogen atom or an alkali metal, and n1, n2, n3, and n4 each independently represent 0 or 1,

Formula (3)

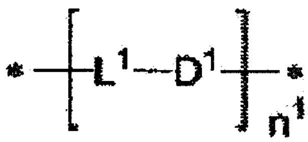

in Formula (3), $L^1$ represents a divalent linking group, $D^1$ represents a partial structure obtained by removing two hydrogen atoms from the compound represented by Formula (1) or Formula (2), and $n^1$ represents 2 to 100,

Formula (4) $L^2[D_2]_{n2}$

in Formula (4), $L^2$ represents an $n^2$-valent linking group, $D^2$ represents a partial structure obtained by removing one hydrogen atom from the compound represented by Formula (1) or Formula (2), and $n^2$ represents an integer of 2 to 6.

**5.** The coloring composition according to claim 4,

wherein the compound represented by Formula (1) or Formula (2) is a compound represented by the following Formula (1-1) or Formula (2-1),

Formula (1-1)

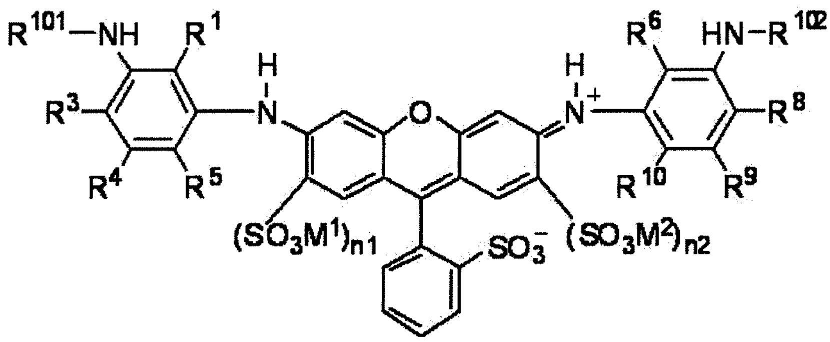

Formula (2-1)

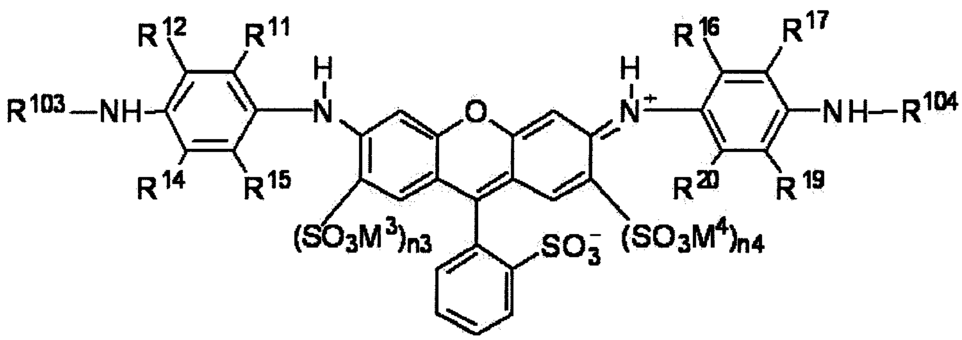

in Formula (1-1) and Formula (2-1) $R^1$, $R^3$, $R^4$, $R^5$, $R^6$, $R^8$, $R^9$, $R^{10}$, $R^{11}$, $R^{12}$, $R^{14}$, $R^{15}$, $R^{16}$, $R^{17}$, $R^{19}$, and $R^{20}$ each independently represent a hydrogen atom or a substituent, $R^{101}$, $R^{102}$, $R^{103}$, and $R^{104}$ each independently represent a substituted or unsubstituted alkyl group, a substituted or unsubstituted aryl group, a substituted or unsubstituted heterocyclic group, a substituted or unsubstituted carbonyl group, a substituted or unsubstituted sulfonyl group, a substituted or unsubstituted alkoxycarbonyl group, a substituted or unsubstituted aryloxycarbonyl group, a carbamoyl group, a substituted or unsubstituted monoalkylaminocarbonyl group, a substituted or unsubstituted dialkylaminocarbonyl group, a substituted or unsubstituted monoarylaminocarbonyl group, a substituted or unsubstituted diarylaminocarbonyl group, or a substituted or unsubstituted alkylarylaminocarbonyl group, $M^1$, $M^2$, $M^3$, and $M^4$ each independently represent a hydrogen atom or an alkali metal, and n1, n2, n3, and n4 each independently represent 0 or 1.

**6.** The coloring composition according to claim 5,

wherein $R^{101}$, $R^{102}$, $R^{103}$, and $R^{104}$ each independently represent a substituted or unsubstituted alkyl group, a substituted or unsubstituted aryl group, a substituted or unsubstituted heterocyclic group, a substituted or unsubstituted sulfonyl group, a substituted or unsubstituted alkoxycarbonyl group, a substituted or unsubstituted aryloxycarbonyl group, a carbamoyl group, a substituted or unsubstituted monoalkylaminocarbonyl group, a

substituted or unsubstituted dialkylaminocarbonyl group, a substituted or unsubstituted monoarylaminocarbonyl group, a substituted or unsubstituted diarylaminocarbonyl group, or a substituted or unsubstituted alkylarylaminocarbonyl group.

**7.** The coloring composition according to any one of claims 4 to 6,

wherein $R^4$ and $R^9$ in Formula (1) or Formula (1-1) each independently represent a sulfo group.

**8.** The coloring composition according to any one of claims 1 to 7,

wherein a content of a xanthene compound which is soluble in water is 1 to 20 mass%.

**9.** The coloring composition according to any one of claims 1 to 8,

wherein a content of a compound represented by Formula (A) is 0.0001 to 5 mass%.

**10.** An ink jet recording ink comprising the coloring composition according to any one of claims 1 to 9.

**11.** An ink jet recording method comprising forming an image using the coloring composition according to any one of claims 1 to 9 or using the ink jet recording ink according to claim 10.

## INTERNATIONAL SEARCH REPORT

International application No. PCT/JP2015/077888

**A. CLASSIFICATION OF SUBJECT MATTER**

*C09B67/20*(2006.01)i, *B41J2/01*(2006.01)i, *B41M5/00*(2006.01)i, *C09B11/28*(2006.01)i, *C09D11/328*(2014.01)i

According to International Patent Classification (IPC) or to both national classification and IPC

**B. FIELDS SEARCHED**

Minimum documentation searched (classification system followed by classification symbols)
C09B1/00-69/10, B41J2/00-2/525, B41M5/00-5/52, C09D11/00-11/54

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)
CAplus/REGISTRY(STN)

**C. DOCUMENTS CONSIDERED TO BE RELEVANT**

| Category* | Citation of document, with indication, where appropriate, of the relevant passages | Relevant to claim No. |
|---|---|---|
| A | JP 2014-5462 A (Fujifilm Corp.), 16 January 2014 (16.01.2014), claims; examples & CA 2817427 A1 & CN 103450736 A & EP 2669338 A2 & US 2013/0319287 A1 claims; examples | 1-11 |
| A | WO 2013/129265 A1 (Fujifilm Corp.), 06 September 2013 (06.09.2013), claims; examples & CN 104144986 A & EP 2821444 A1 & JP 2013-181065 A & JP 2013-181066 A & JP 2013-181067 A & TW 201343807 A & US 2014/0368573 A1 claims; examples | 1-11 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14 December 2015 (14.12.15) | 22 December 2015 (22.12.15) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (July 2009)

**INTERNATIONAL SEARCH REPORT**

International application No.
PCT/JP2015/077888

C (Continuation). DOCUMENTS CONSIDERED TO BE RELEVANT

| Category* | Citation of document, with indication, where appropriate, of the relevant passages | Relevant to claim No. |
|---|---|---|
| A | JP 2014-37530 A (Sumitomo Chemical Co., Ltd.), 27 February 2014 (27.02.2014), claims; paragraphs [0021] to [0040], [0046]; examples & CN 103571233 A & KR 10-2014-0012592 A & TW 201408736 A | 1-11 |
| A | JP 2006-199860 A (Canon Inc.), 03 August 2006 (03.08.2006), claims; examples (Family: none) | 1-11 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011148973 A
- JP 2006199860 A
- JP 2011137968 A
- JP 2013133394 A
- JP 8169172 A
- JP H08169172 A
- JP 8027693 A
- JP H0827693 A
- JP 2276670 A
- JP H02276670 A
- JP 7276789 A
- JP H07276789 A
- JP 9323475 A
- JP H09323475 A
- JP 62238783 A
- JP S62238783 A
- JP 10153989 A
- JP H10153989 A
- JP 10217473 A
- JP H10217473 A
- JP 10235995 A
- JP H10235995 A
- JP 10337947 A
- JP H10337947 A
- JP 10217597 A
- JP H10217597 A
- JP 2000363090 A
- JP 2000315231 A
- JP 2000354380 A
- JP 2000343944 A
- JP 2000268952 A
- JP 2000299465 A
- JP 2000297365 A
- JP 2014202470 A